(19) **Europäisches Patentamt** / **European Patent Office** / **Office européen des brevets**

(11) **EP 3 707 676 B1**

(12) ## FASCICULE DE BREVET EUROPEEN

(45) Date de publication et mention de la délivrance du brevet:
**04.05.2022 Bulletin 2022/18**

(21) Numéro de dépôt: **18803324.5**

(22) Date de dépôt: **24.10.2018**

(51) Classification Internationale des Brevets (IPC):
**G06T 7/73** (2017.01)

(52) Classification Coopérative des Brevets (CPC):
**G06T 7/74;** G06N 3/0454; G06N 3/08;
G06T 2207/10024; G06T 2207/10028;
G06T 2207/20081; G06T 2207/20084;
G06T 2207/20164; G06T 2207/30244

(86) Numéro de dépôt international:
**PCT/EP2018/079179**

(87) Numéro de publication internationale:
**WO 2019/091787 (16.05.2019 Gazette 2019/20)**

(54) **PROCÉDÉ D'ESTIMATION DE POSE D'UNE CAMÉRA DANS LE RÉFÉRENTIEL D'UNE SCÈNE TRIDIMENSIONNELLE, DISPOSITIF, SYSTÈME DE RÉALITE AUGMENTÉE ET PROGRAMME D'ORDINATEUR ASSOCIÉ**

VERFAHREN ZUR SCHÄTZUNG DER INSTALLATION EINER KAMERA IM REFERENZRAHMEN EINER DREIDIMENSIONALEN SZENE, VORRICHTUNG, SYSTEM MIT ERWEITERTER REALITÄT UND ZUGEHÖRIGES COMPUTERPROGRAMM

METHOD FOR ESTIMATING THE INSTALLATION OF A CAMERA IN THE REFERENCE FRAME OF A THREE-DIMENSIONAL SCENE, DEVICE, AUGMENTED REALITY SYSTEM AND ASSOCIATED COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2017 FR 1760541**
**25.05.2018 FR 1854435**

(43) Date de publication de la demande:
**16.09.2020 Bulletin 2020/38**

(73) Titulaire: **B<>COM**
**35510 Cesson-Sévigné (FR)**

(72) Inventeurs:
• **DUONG, Nam-Duong**
**35700 Rennes (FR)**
• **KACETE, Amine**
**35000 Rennes (FR)**
• **SOLADIE, Catherine**
**35340 La Bouexiere (FR)**

(74) Mandataire: **Ermeneux, Bertrand**
**AVOXA**
**5 allée Ermengarde d'Anjou**
**ZAC Atalante Champeaux**
**CS 40824**
**35108 Rennes (FR)**

(56) Documents cités:
• **TORSTEN SATTLER ET AL: "Fast image-based localization using direct 2D-to-3D matching", 2013 IEEE INTERNATIONAL CONFERENCE ON COMPUTER VISION, 1 novembre 2011 (2011-11-01), pages 667-674, XP055298542, ISSN: 1550-5499, DOI: 10.1109/ICCV.2011.6126302**
• **MENG LILI ET AL: "Backtracking regression forests for accurate camera relocalization", 2017 IEEE/RSJ INTERNATIONAL CONFERENCE ON INTELLIGENT ROBOTS AND SYSTEMS (IROS), IEEE, 24 septembre 2017 (2017-09-24), pages 6886-6893, XP033266762, DOI: 10.1109/IROS.2017.8206611**

EP 3 707 676 B1

- Eric Brachmann ET AL: "DSAC - Differentiable RANSAC for Camera Localization", arXiv, 7 août 2017 (2017-08-07), pages 1-11, XP055456666, Extrait de l'Internet: URL:https://arxiv.org/pdf/1611.05705 [extrait le 2018-03-06]
- DAVID G. LOWE: "Distinctive Image Features from Scale-Invariant Keypoints", INTERNATIONAL JOURNAL OF COMPUTER VISION, vol. 60, no. 2, 5 janvier 2004 (2004-01-05), pages 91-110, XP055203065, ISSN: 0920-5691, DOI: 10.1023/B:VISI.0000029664.99615.94
- IRSCHARA A ET AL: "From structure-from-motion point clouds to fast location recognition", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 juin 2009 (2009-06-20), pages 2599-2606, XP031607114, ISBN: 978-1-4244-3992-8

**Description**

1. **Domaine de l'invention**

Le domaine de l'invention est celui de l'estimation de la pose d'une caméra dans le référentiel d'une scène tridimensionnelle (3D).

L'invention peut notamment, mais non exclusivement, trouver une application dans le domaine de la réalité augmentée, pour l'insertion d'un ou plusieurs objets virtuels ou réels dans l'image de la scène réelle vue par la caméra.

2. **Présentation de l'art antérieur**

On connait du document de Shotton *et al.*, intitulé « Scene Coordinate Regression Forests for Camera Relocalisation in RGB-D images », publié par la Conférence IEEE Conference on Computer Vision and Pattern Recognition, en 2013, une solution permettant de calculer la pose d'une caméra RGB-D (pour « Red Green Blue - Depth », en anglais) à l'aide d'un système de prédiction automatique, pour (« machine learning », en anglais), qui, après une phase d'apprentissage, est capable de prédire, à partir d'une image d'intensités de couleurs et une image de profondeur acquises par la caméra, un nuage de points correspondants dans un référentiel de la scène 3D. La pose de la caméra est ensuite estimée sur la base du nuage de points prédit.

Un avantage de cette solution est qu'elle prédit la pose de la caméra de façon complètement automatique sans aucune hypothèse géométrique.

Un premier inconvénient de cette solution est qu'elle impose de manipuler des nuages de points, ce qui la rend complexe à mettre en œuvre, notamment parce qu'elle nécessite des ressources importantes de calcul et de stockage.

Un deuxième inconvénient de cette méthode est qu'elle comprend, aussi bien dans la phase d'apprentissage que dans la phase de test, une transformation préalable de l'image destinée à prendre en compte des paramètres intrinsèques de la caméra, tels que des focales ou des centres de projection. Cette étape nécessite une calibration préalable de la caméra.

Un troisième inconvénient de cette solution est qu'elle nécessite une caméra de profondeur dans la phase de tests, ce qui exclut son utilisation pour une application de réalité virtuelle embarquée dans des équipements terminaux de type mobile, comme par exemple un téléphone intelligent (pour « smartphone », en anglais) ou une tablette.

On connait aussi du document de Kendall et al., intitulé « PoseNet : A convolutional Network for Rel-Time 6-DOF Camera Relocalization », publié dans les Proceedings de la conférence IEEE International Conference on Computer Vision, pages 2938-2946, en 2015, une méthode d'estimation directe de la pose de la caméra à partir d'images d'une caméra RGB 2D et d'un réseau de neurones convolutif. Le réseau de neurones utilisé est adapté d'un réseau de neurones connu et entraîné pour classifier des images, en modifiant certaines couches. On appellera cette méthode « PoseNet-1 ». L'apprentissage du réseau est réalisé à partir d'une base d'images RGB entières et leurs poses correspondantes. Il s'appuie sur la minimisation d'une fonction de perte qui prend en compte la somme pondérée d'une erreur de translation et d'une erreur de rotation de la pose. La pondération comprend un facteur d'échelle qui dépend de la scène.

Un inconvénient majeur de la solution PoseNet-1 est que la valeur du facteur d'échelle est difficile à déterminer. Son évaluation se fait par voie empirique ce qui nécessite plusieurs apprentissages à partir desquels une valeur optimale est déterminée. La configuration du réseau est donc complexe.

Dans une deuxième publication plus récente, intitulée « Geometric loss functions for camera pose regression with deep learning » et publiée sur ArXiv.2017, les mêmes auteurs ont proposé une nouvelle version appelée « PoseNet-2 » de leur méthode qui utilise une fonction de perte purement géométrique qui n'utilise pas de facteur d'échelle.

Un avantage de ces deux solutions est qu'elles réalisent une estimation de la pose de la caméra en temps réel.

Un inconvénient de ces méthodes PoseNet-2 est qu'elles n'estiment pas toujours la pose de la caméra avec une précision suffisante pour des applications de réalité augmentée et qu'elles ne fournissent aucune indication sur la précision ou la confiance associée à l'estimation de pose.

On connaît également l'article *"Backtracking Regression Forests for Accurate Camera Relocalization"* par Meng et al., 2017, qui décrit un procédé d'estimation de la pose d'une caméra basé sur l'extraction de points d'intérêts et de patchs entourant ces points d'intérêts. La localisation 3D des points d'intérêts est ensuite obtenue par une forêt aléatoire décisionnelle appliquée aux descripteurs associées aux patchs définis dans l'image.

3. **Objectifs de l'invention**

L'invention vient améliorer la situation.

L'invention a notamment pour objectif de pallier ces inconvénients de l'art antérieur.

Plus précisément, un objectif de l'invention est de proposer une solution d'estimation de pose plus précise tout en gardant une complexité adaptée à des contraintes temps réel et une configuration simple.

Un autre objectif de l'invention est de fournir une mesure de confiance associé à la pose de la caméra estimée.

Encore un autre objectif de l'invention est de proposer une solution robuste aux occultations de la scène.

## 4. Exposé de l'invention

Ces objectifs, ainsi que d'autres qui apparaîtront par la suite, sont atteints à l'aide d'un procédé d'estimation de pose d'une caméra dans un référentiel d'une scène tridimensionnelle, ledit procédé étant décrit à la revendication 1.

L'invention repose sur une approche tout-à-fait nouvelle et inventive de l'estimation de pose d'une caméra, qui s'appuie sur une prédiction directe de la localisation 3D de petites zones de l'image ou imagettes centrées sur des points d'intérêts de l'image à partir de leur position 2D dans l'image d'entrée, sans nécessité de recourir à une carte de profondeur, et sur une mise en correspondance 3D/2D des localisations des points d'intérêt de l'image, indépendante des images précédemment acquises.

Plutôt que d'utiliser l'ensemble des points de l'image, l'invention restreint la prédiction à des petites zones de l'image, dites imagettes, qui concentrent l'information pertinente, ce qui permet de réduire la complexité du système sans compromis sur son efficacité.

Le fait de prédire la localisation 3D d'imagettes (3 composantes) plutôt que directement la pose de la caméra (6 composantes) contribue en outre à simplifier la structure du système de prédiction automatique.

Selon un premier aspect de cette description, l'étape de prédiction prédit une localisation 3D par imagette par application d'un système de prédiction automatique comprenant un réseau de neurones comprenant plusieurs couches de convolution et plusieurs couches de connexion.

Un avantage de ce premier aspect est qu'il réalise un bon compromis entre complexité et performances.

Selon l'invention, l'étape de prédiction comprend une extraction d'un vecteur de caractéristiques par imagette et en ce que l'application du système de prédiction automatique prédit une pluralité de localisations 3D par vecteur de caractéristiques extrait.

Un avantage est que l'extraction d'un vecteur de caractéristiques permet d'améliorer la précision de la localisation 3D prédite et donc de la pose estimée.

Selon l'invention, le système de prédiction automatique comprend une forêt aléatoire décisionnelle comprenant des arbres de décision comprenant des nœuds séparateurs, undit nœud étant apte à séparer de façon binaire un groupe de vecteurs de caractéristiques issu d'un nœud amont en sous-groupes, à transmettre les sous-groupes à des nœuds séparateurs aval et des nœuds feuilles, aptes à stocker la pluralité de localisations 3D des imagettes associées à un sous-groupe reçu d'un nœud séparateur amont, le procédé comprend dans une phase préalable une étape d'entraînement du système de prédiction comprenant un test de séparation binaire basé sur un calcul de distance entre le vecteur de caractéristiques extrait d'une imagette de l'ensemble d'apprentissage et un vecteur de caractéristiques de référence et une comparaison de la distance calculée par rapport à un seuil prédéterminé.

Contrairement aux tests binaires réalisés habituellement dans une forêt décisionnelle, qui évaluent une distance entre deux éléments choisis aléatoirement dans un même canal d'une donnée d'entrée, comme par exemple une différence entre deux intensités de pixels d'une même image, l'invention propose de comparer l'ensemble des composantes du vecteur de caractéristiques associé à une imagette à un vecteur de caractéristiques de référence. Par exemple le vecteur de caractéristiques est choisi parmi les vecteurs de caractéristiques extraits des imagettes de l'ensemble d'apprentissage par itération du test et en fonction d'un critère de minimisation d'erreur. Ceci permet de mieux discriminer les points clés les uns des autres.

L'avantage de recourir à une forêt décisionnelle aléatoire est qu'elle comprend plusieurs arbres entraînés pour prédire chacun une localisation à partir d'un vecteur d'entrée, ce qui rend le procédé d'estimation de pose plus robuste aux scènes comprenant des motifs répétitifs.

Selon encore un autre aspect de l'invention, l'extraction comprend une prédiction du vecteur de caractéristiques par application d'un deuxième système de prédiction automatique, ledit système ayant été entraîné à l'aide d'un ensemble d'apprentissage comprenant des imagettes issues d'une pluralité d'images de la scène acquises par la caméra depuis une pluralité de points de vue, une imagette étant associée dans ledit ensemble à une position 2D de son point d'intérêt dans un référentiel de l'image et à une position 3D de son point d'intérêt dans le référentiel de la scène.

Un avantage est d'obtenir des vecteurs de caractéristiques encore plus pertinents et d'améliorer les performances de la prédiction, donc la précision de la pose estimée.

Avantageusement, le deuxième système de prédiction automatique comprenant un réseau de neurones comprend plusieurs couches de convolution et le procédé comprend dans une phase préalable une étape d'entraînement du deuxième système à partir de l'ensemble d'apprentissage, après ajout audit réseau de neurones d'une pluralité de couches de connexion agencées à la suite des couches de convolution.

De la sorte, le réseau de neurones enrichi des couches de connexion fournit en sortie des localisations 3D prédites, ce qui correspond aux vérités terrains fournies dans l'ensemble d'apprentissage.

Une fois l'apprentissage terminé, il suffit de supprimer les couches de connexion pour obtenir les vecteurs de caractéristiques qu'il a appris à extraire des données d'entrée.

Selon un aspect de l'invention, la phase préalable d'apprentissage comprend une étape d'obtention (A3) de localisations 3D de la pluralité de points d'intérêt dans le référentiel de la scène, dites de vérité terrain par triangulation géométrique des positions 2D du point dans l'image et dans une image précédente.

Alternativement, la phase préalable d'apprentissage comprend une étape d'acquisition d'une image de profondeur associée à une image d'intensité, l'ensemble d'apprentissage comprend en outre l'image de profondeur associée à l'image d'intensité, une étape d'obtention (A3) de localisations 3D de la pluralité de points d'intérêt dans le référentiel de la scène, dites de vérité terrain par projection perspective de leurs position 2D et profondeur à l'aide d'un modèle prédéterminé de la caméra et de la pose connue, dans le référentiel de la scène.

Selon un autre aspect de l'invention, l'estimation de pose comprend la mise en œuvre d'au moins une itération des sous-étapes suivantes :

- Détermination d'un sous-ensemble de la pluralité de points d'intérêt ;
- Calcul d'au moins une hypothèse de pose à partir des localisations 3D prédites pour le sous-ensemble et des positions 2D correspondantes; et
- Evaluation d'une erreur de reprojection des positions 2D de la pluralité de points d'intérêt dans le référentiel de la scène à l'aide de l'hypothèse de pose calculée par rapport aux localisations 3D prédites ;

et une sélection de l'hypothèse de pose qui minimise l'erreur de reprojection.

Un avantage de ce mode de réalisation est de ne prendre en compte que les meilleures prédictions de localisation 3D dans l'estimation de pose.

Selon un autre aspect de l'invention, une mesure de confiance de la pose estimée est évaluée au moins en fonction d'un nombre de points d'intérêt, pour lesquels l'erreur de reprojection est inférieure à un seuil prédéterminé.

Un avantage de cette mesure de confiance est qu'elle apporte une dimension probabiliste à la pose estimée.

Selon encore un autre aspect de l'invention, le procédé comprend une phase préalable d'apprentissage comprenant les étapes suivantes :

- Obtention d'un ensemble d'apprentissage comprenant une pluralité de d'images d'intensité de couleur de la scène acquises par la caméra, depuis une pluralité de points de vue, un point de vue étant associé à une pose connue de la caméra;

- Extraction d'une pluralité de points d'intérêt de ladite image d'intensités de couleurs, un dit point étant associé à une position 2D dans l'image d'intensités;

- Obtention de localisations 3D de la pluralité de points d'intérêt dans le référentiel de la scène, dites de vérité terrain;

- Entraînement du système automatique de prédiction de pose à partir des couples d'imagettes, un couple d'imagettes étant associé à la position 2D de son point d'intérêt dans un référentiel de l'image et à la localisation 3D de son point d'intérêt dans le référentiel de la scène.

Selon une première option, dans la phase d'apprentissage, la localisation 3D d'un point d'intérêt de l'image d'intensités associée à une pose connue est obtenue par triangulation géométrique des positions 2D du point dans l'image et dans une image précédente.

Un avantage de cette méthode est qu'elle ne nécessite pas de caméra de profondeur pour labelliser les données d'entrées.

Selon une deuxième option, dans la phase d'apprentissage, la caméra est configurée pour acquérir simultanément une image de profondeur associée à une image d'intensités et :

- l'ensemble d'apprentissage obtenu comprend une pluralité de couples d'images d'intensité de couleur et de profondeur de la scène, depuis une pluralité de points de vue, un point de vue étant associé à une pose connue de la caméra;

- les localisations 3D des points d'intérêt sont obtenues par projection perspective de leurs position 2D et profondeur à l'aide d'un modèle prédéterminé de la caméra et de la pose connue, dans le référentiel de la scène.

Un avantage de ce mode de réalisation est qu'il permet de labelliser de façon simple et efficace les imagettes grâce à l'utilisation d'une caméra de profondeur limitée à la phase d'apprentissage.

Avantageusement, la prédiction est réalisée par un réseau de neurones comprenant 5 étages de convolution.

Un avantage de cette architecture particulière de réseau de neurones est qu'elle est de faible profondeur, tout en permettant une prédiction efficace des localisations 3D des points d'intérêts de l'image dans le référentiel de la scène directement à partir des imagettes d'intensité.

Selon encore un autre aspect de l'invention, la pluralité de localisations 3D prédites par la forêt décisionnelle aléatoire comprenant une distribution de localisations 3D prédites par arbre, unedite distribution étant associée à une mesure de covariance, l'étape d'estimation comprend une sous-étape préalable de filtrage de la pluralité de distributions de localisations 3D prédites par comparaison de la mesure de covariance associée une distribution à un seuil prédéterminé et suppression de la distribution prédictions dont la mesure de covariance est supérieure ou égale audit seuil.

Un avantage est, lorsque le système de prédiction automatique comprend une forêt décisionnelle aléatoire qui produit une distribution gaussienne de localisations 3D prédites par arbre, de ne conserver que les moyennes des distributions les plus compactes pour l'estimation de pose.

L'invention concerne également un dispositif adapté pour mettre en œuvre le procédé d'estimation de pose selon l'un quelconque des modes particuliers de réalisation définis ci-dessus. Ce dispositif pourra bien sûr comporter les différentes caractéristiques relatives au procédé selon l'invention. Ainsi, les caractéristiques et avantages de ce dispositif sont les mêmes que ceux du procédé d'estimation de pose, et ne sont pas détaillés plus amplement.

Avantageusement, un tel dispositif est compris dans un équipement terminal, par exemple de type tablette ou téléphone intelligent (pour « smartphone », en anglais).

L'invention concerne aussi un système de réalité augmentée comprenant une caméra apte à acquérir une image d'intensités de couleurs d'une scène tridimensionnelle réelle, un module) de composition d'images apte à composer une image de sortie à partir d'une image d'entrée acquise de la scène par la caméra et au moins un objet réel ou virtuel, à l'aide d'une localisation 3D initiale dudit au moins un objet dans la scène et d'une pose estimée de la caméra, un module d'affichage apte à restituer l'image de sortie et un dispositif d'estimation de pose de la caméra qui vient d'être décrit.

L'invention concerne aussi un programme d'ordinateur comportant des instructions pour la mise en œuvre des étapes d'un procédé d'estimation de pose d'une caméra tel que décrit précédemment, lorsque ce programme est exécuté par un processeur.

Ce programme peut utiliser n'importe quel langage de programmation. Il peut être téléchargé depuis un réseau de communication et/ou enregistrés sur un support lisible par ordinateur.

L'invention se rapporte enfin à un support d'enregistrement, lisible par un processeur, intégrés ou non au dispositif d'estimation de pose d'une caméra selon l'invention, éventuellement amovible, mémorisant un programme d'ordinateur mettant en œuvre un procédé d'estimation de pose, tel que décrit précédemment.

## 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** décrit de façon schématique les étapes d'un procédé d'estimation de pose selon l'invention, dans une phase d'apprentissage ;

- la figure **2** illustre une image RGB d'entrée à partir de laquelle on a extrait des points clés et formé des imagettes autour de ces points clés ;

- la figure **3** illustre un exemple d'image RGB d'entrée dont on a labellisé les points clés à partir d'une image de profondeur acquise par une caméra RGB-D et les caractéristiques de la caméra ;

- la figure **4** illustre de façon schématique un modèle de projection de sténopé d'un point de l'image d'entrée dans le référentiel de la caméra à l'aide de la carte de profondeur puis dans le référentiel monde à l'aide de la pose H = [R|t] ;

- la figure **5** compare la complexité du réseau de neurones convolutif mis en œuvre dans un mode de réalisation de l'invention en termes de nombres de paramètres à celles des réseaux de l'art antérieur ;

- la figure **6** présente de façon schématique la structure en couche du réseau de neurones convolutif selon un mode de réalisation de l'invention ;

- la figure **7** illustre le principe de filtrage par une couche de convolution d'un réseau de neurones convolutif ;

- la figure **8** illustre de façon schématique le principe d'une couche de pooling d'un réseau de neurones convolutif ;

- la figure **9** décrit de façon schématique les étapes d'un procédé d'estimation de pose selon un premier mode de réalisation de l'invention, dans une phase de test ;

- la figure **10** décrit de façon plus détaillée l'étape d'estimation de pose de l'image d'entrée par mise en correspondance des localisations 2D et 3D de ses imagettes selon un mode de réalisation de l'invention et élimination des prédictions incorrectes (« outliers ») ;

- la figure **11** décrit de façon schématique les étapes d'un procédé d'estimation de pose selon un deuxième mode de réalisation de l'invention, dans une phase de test ;

- la figure **12** illustre un exemple de vecteur de caractéristiques extrait selon le deuxième mode de réalisation de l'invention ;

- la figure **13** présente de façon schématique la structure du système de prédiction automatique mis en œuvre selon le deuxième mode de réalisation de l'invention ;

- la figure **14** décrit de façon schématique la structure d'une forêt décisionnelle aléatoire mis en œuvre selon le deuxième mode de réalisation de l'invention ;

- la figure **15** présente une reconstruction visuelle de la trajectoire de la caméra à partir de sa pose estimée et la compare à celle de la vérité terrain ;

- la figure **16** illustre le rapport entre le nombre d'inliers retenu par le procédé selon l'invention et l'erreur d'estimation de pose de la caméra sur plusieurs scènes ;

- la figure **17** illustre la robustesse de la méthode d'estimation de pose selon l'invention face à une situation d'occultation partielle ;

- la figure **18** illustre le lien entre temps de calcul de la prédiction, précision de l'estimation de pose et nombre d'imagettes extraites de l'image d'entrée ; et

- la figure **19** décrit de façon schématique la structure matérielle d'un dispositif d'estimation de pose selon un mode de réalisation de l'invention.

## 6. Description d'un mode de réalisation particulier de l'invention

Le principe général de l'invention repose sur la prédiction directe des localisations 3D dans le référentiel de la scène d'une pluralité d'imagettes extraites d'une image 2D d'intensités de couleur de la scène et sur l'estimation de la pose de la caméra par mise en correspondance des localisations 3D prédites avec les positions 2D des imagettes. Cette prédiction est réalisée à l'aide d'un système de prédiction automatique qui nécessite d'être entraîné à partir de données labellisées avec le résultat de la prédiction, au cours d'une phase préalable, dite d'apprentissage. Une fois entraîné, il peut être utilisé sur des données d'entrée non labellisées, dans un mode de fonctionnement normal, dit phase de test.

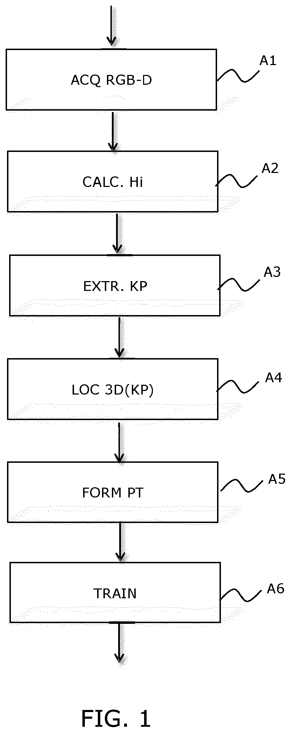

En relation avec la Figure **1,** on décrit les étapes d'un procédé d'estimation de pose d'une caméra dans une phase d'apprentissage selon un premier mode de réalisation de l'invention.

Au cours d'une étape A1, des données d'apprentissage sont collectées. Ces données sont constituées d'une collection de N images (pour « frames », en anglais), avec N entier non nul, qui sont soit acquises directement par une caméra RGB-D, apte à fournir une image d'intensité de couleur $I^c$ et son image de profondeur $I^D$ associée, soit obtenues d'une base de données publiques. Ces données d'apprentissage comprennent aussi une pose de la caméra dans le référentiel monde, associée à chacune des images de la collection. N est par exemple compris entre 100 et 2000.

Par exemple, les données d'apprentissage sont acquises par un module d'acquisition MACQ constitué par exemple d'un système « Kinect.v2 ® », marque déposée, apte à acquérir simultanément les images d'intensité de couleur et de profondeur et la pose de caméra associée. Ce système comprend un capteur RGB apte à générer une image de résolution w=1920xh=1080 pixels à 30 Hz et un capteur D de profondeur apte à capturer une image de résolution 512x424 avec la même fréquence. L'image d'intensité de couleur et l'image de profondeur sont ensuite alignées de telle sorte qu'elles présentent les mêmes dimensions w, h et correspondent à un unique point de vue de la caméra RGB-D.

Le système Kinect.v2 comprend en outre un émetteur laser et une caméra infrarouge. Le laser génère une onde modulée qui est capturée par la caméra infrarouge. Un temps de trajet de l'onde entre l'émetteur et un objet de la scène est calculé puis exploité pour en déduire une distance entre l'émetteur et l'objet.

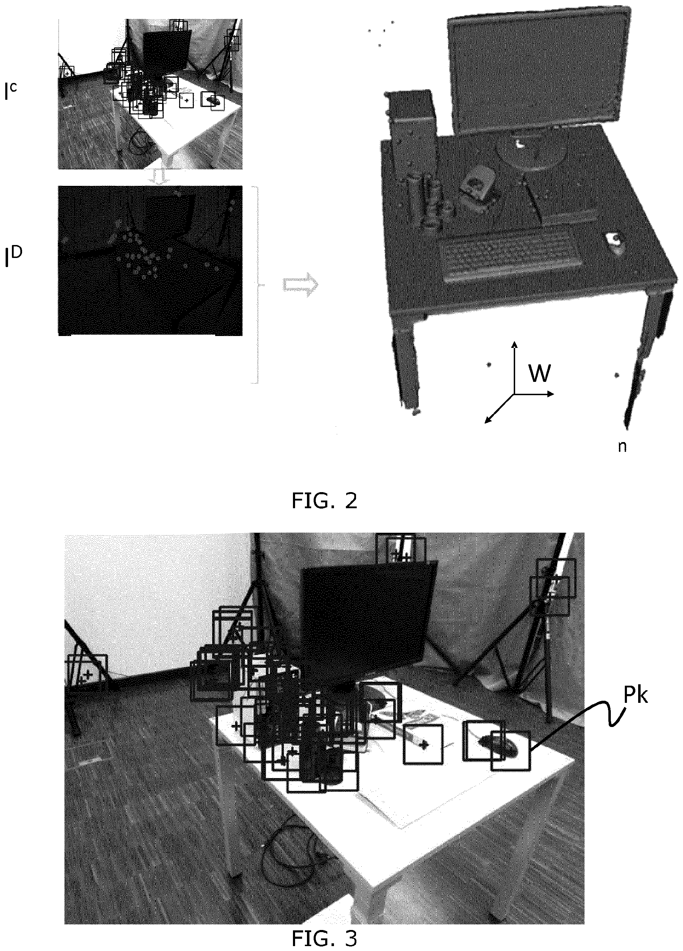

Dans la suite, on désigne par ($I_i^c$, $I_i^D$) avec i entier compris entre 1 et N, un couple d'images acquis par la caméra RGB-D. Un exemple de couple d'images ($I_i^c$, $I_i^D$) est illustré par la Figure 2.

Selon l'exemple précédent, la pose de la caméra est obtenue en A2 à l'aide d'un module d'annotation apte à calculer une pose associée à chaque paire d'images de la caméra. Il s'agit par exemple d'un module « KinectFusion ® », marque déposée, inclus dans le système « Kinect.v2 ® », dont le principe de fonctionnement est par exemple décrit dans le document de Newcombe et al. intitulé « KinectFusion : Real-time Dense Surface Mapping and Tracking », par la conférence IEEE International Symposium on Mixed and Augmented Reality (ISMAR), 2011. Ce système est basé sur une méthode de reconstruction dense 3D et temps-réel qui s'appuie sur une technique de Localisation et Mise en correspondance simultanées ou SLAM (pour « Simultaneous Localization and Mapping », en anglais). Une telle technique fait des hypothèses géométriques et temporelles sur la scène. Elle considère une paire d'images en entrée, en extrait des points d'intérêts et les met en correspondance, ce qui lui permet, en résolvant un système linéaire d'équations, de déterminer précisément la pose de la caméra et de reconstruire un modèle 3D de la scène $\mathcal{L}_M$ .

Ce module fournit donc les valeurs de pose $H_i$ de la caméra associées à chaque instant d'acquisition d'un couple d'images RGB-D $I_i^c$, $I_i^D$. Ces informations constituent une « vérité terrain » nécessaire à l'apprentissage du système de prédiction de localisation 3D des imagettes qui va être décrit ci-après.

On notera qu'il existe d'autres systèmes d'annotation de poses, qui utilisent des marqueurs positionnés sur la caméra RGB-D. Par exemple, ils sont composés d'un matériau qui offre une réponse maximale à un module de segmentation comprenant un laser, apte à les localiser. Par exemple, la base de données CORBS décrite dans le document de Wasenmüller et al., intitulé « Corbs : Comprehensive RGB-D Benchmark for SLAM using Kinect v2 », publié par la conférence Applications of Computer Vision, en 2016, pages 1-7, a été annotée de cette manière.

Selon une alternative, on peut aussi obtenir directement d'une base d'images le couple d'images $I_i^c$, $I_i^D$ et sa pose Hi associée.

De façon connue en soi, la pose d'un couple d'images s'exprime par exemple sous la forme $H_i = (Q_i, T_i)$, avec $Q_i$ un quaternion unitaire comprenant 4 composantes de rotation $q_w$, $q_x$, $q_y$, $q_z$ et $T_i$ un vecteur comprenant 3 composantes de translation $t_x$, $t_y$, $t_z$ de la caméra dans le référentiel monde (O, x, y, z).

Au cours d'une étape A3, on extrait K points d'intérêt KP de l'image d'intensité de couleur $I_i^c$, avec K entier non nul, inférieur à au nombre w.h de pixels contenus dans l'image $I_i^c$. On désigne par points d'intérêt, ou points clés, des points invariants aux rotations/translations/ changements d'échelle. Ce module détecte des points isolés (pour « sparse », en anglais) par exemple à l'aide d'une méthode dite SURF et décrite dans le document de Bay et al., intitulé « Speeded-up Robust Features (SURF) », publié dans la revue Computer Vision and Image Understanding , numéro 110, pages 346-359, en 2008.

La méthode SURF exploite une matrice Hessienne $\mathcal{H}(x,\sigma)$ définie comme suit :

$$\mathcal{H}(x,\sigma) = \begin{pmatrix} L_{xx}(x,\sigma) & L_{xy}(x,\sigma) \\ L_{yx}(x,\sigma) & L_{yy}(x,\sigma) \end{pmatrix}$$

avec

$$L_{xx}(x,\sigma) = I(x) \times \frac{\partial^2}{\partial^2 x^2} g(\sigma), \quad L_{xy}(x,\sigma) = I(x) \times \frac{\partial^2}{\partial xy} g(\sigma)$$

où I(x) représente l'image dans laquelle on cherche à extraire les points clés. $g(\sigma)$ définit une gaussienne avec un noyau $\sigma$. La convolution de l'image avec la gaussienne a pour but de représenter l'image à plusieurs résolutions, sous la forme d'une pyramide d'échelles. Une dérivation seconde est appliquée à aux images de la pyramide $\left(\frac{\partial^2}{\partial^2 x^2}, \frac{\partial^2}{\partial^2 y^2}\right)$ ce qui correspond à une intensité de variation de contraste. Concrètement, pour calculer les dérivées secondes sur l'image on utilise des noyaux discrets convolutifs. En relation avec la Figure **3,** on présence des exemples de filtres permettant de calculer $L_{xx}$ et $L_{xy}$ respectivement.

On calcule ensuite le déterminant de H qui estdéfini comme suit :

$$Det(\mathcal{H}) = D_{xx}D_{yy} - \left(0.9 D_{xy}\right)^2$$

où $D_{xx}$ est l'approximation de $L_{xx}$ par une convolution avec un noyau discret. Une réponse maximale correspond à un point clé *KP(x,y,s)* dont la position dans l'image vaut *x,y* et s correspond à l'échelle à laquelle il a été extrait. Une orientation de ce point clé est calculée à partir d'une ondelette de Haar dans les directions x,y sur un voisinage prédéterminé. Une orientation principale est calculée comme étant la somme de toute les réponses des ondelettes sur un secteur de $\pi/3$.

En relation avec la Figure **3,** on présente un exemple de points d'intérêt extraits d'une image d'intensités de couleur $I_i^C$. On note qu'il s'agit par exemple de points correspondant à des angles et des changements de contraste importants.

On extrait au maximum 500 points d'intérêt par image. On associe à chaque point sa valeur d'échelle et son orientation. La valeur d'échelle indique le niveau de détails et d'importance du point clé extrait. L'orientation indique la nature du changement de contraste.

Au cours d'une étape A4, on obtient une localisation 3D des points d'intérêt $P_{k,i}$ chaque couple d'imagettes $(I_i^C, I_i^D)$ dans le référentiel de la scène. Il s'agit d'une labellisation des échantillons de l'ensemble d'apprentissage. Un exemple est illustré par la Figure **2.**

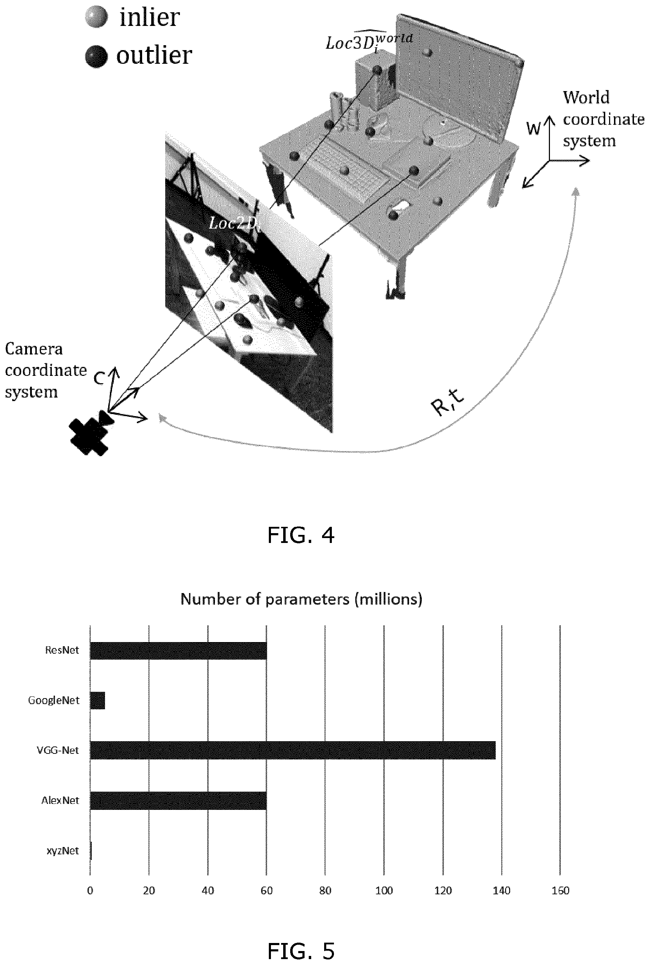

Cette étape, illustrée par la Figure **4,** comprend d'abord une première projection des images $(I_i^C, I_i^D)$ dans un référentiel de la caméra, à l'aide de paramètres intrinsèques Q et t de cette caméra, comprenant un centre de projection $(c_x,c_y)$, une focale horizontale $f_x$ et une focale verticale $f_y$. On notera que dans le cas de pixels carrés, on a fx= fy.

A partir des paramètres intrinsèques du capteur de profondeur de la caméra RGB-D, chaque valeur de profondeur d (représentée par deux coordonnées de pixel u, v) est projetée dans un référentiel 3D de la caméra, selon un modèle de projection dit de sténopé (pour « pinhole », en anglais) connu en soi, en 3 coordonnées (x, y, z) selon les formules suivantes :

$$\begin{cases} x = \dfrac{d(u - c_x)}{f_x} \\ y = \dfrac{d(v - c_y)}{f_y} \\ z = d \end{cases}$$

Il s'agit d'une modélisation simple et linéaire du processus de formation des images au sein d'une caméra. Ce modèle suppose que le système optique de la caméra, c'est-à-dire sa lentille respecte les conditions de Gauss.

On obtient un triplet $Loc3D_i^{Cam}\left(x_i^{Cam}, y_i^{Cam}, z_i^{Cam}\right)$ qui correspond à la localisation 3D du point d'intérêt dans le référentiel de la caméra.

A l'aide de la pose $H_i$ de la caméra, comprenant les paramètres extrinsèques de la caméra, les paramètres intrinsèques Q et t déjà cités, correspondant à la vérité terrain, ce nuage de points est ensuite projeté dans le référentiel monde de la scène (O,x,y,z), selon une deuxième projection basée sur une transformation rigide. On obtient le triplet suivant :

$$Loc3D_i^{World}\left(x_i^{World}, y_i^{World}, z_i^{World}\right)$$

Les données d'entrée du système automatique d'apprentissage prennent alors la forme suivante : { $I_i^C$, $I_i^D$, $Loc3D_i^{World}$ } avec i allant de 1 à N, N étant le nombre d'images de la collection de données d'apprentissage.

Au cours d'une étape A5, illustrée par la Figure **3,** on forme ensuite des imagettes (pour « patches », en anglais) centrées sur les points d'intérêt KP extraits, dans chacune des images du couple $(I_i^C, I_i^D)$. Dans cet exemple de réalisation, elles sont toutes choisies avec les mêmes dimensions, égales à 49x49. Plus généralement, on choisit avantageusement le nombre de points d'intérêts et la dimension des imagettes de telle sorte qu'au maximum deux imagettes se recouvrent de 70 %. Par exemple, on considère jusqu'à 500 imagettes dans une image d'entrée de dimensions par exemple égales à 640x380.

A l'issue de cette étape, on dispose d'un ensemble de K couples d'imagettes $\left(P_{i,k}^C, P_{i,k}^D\right)$ avec k entier compris entre 1 et K, annotés par leur localisation 3D $Loc3D_i^{World}\left(x_i^{World}, y_i^{World}, z_i^{World}\right)$ . associée à leur couple d'images d'origine $(I_i^C, I_i^D)$. Dans la suite, on désigne par échantillon $E_{i,k}$ un couple d'imagettes et sa localisation 3D associée :

$E_{i,k} = \left\{(P_{i,k}^C, P_{i,k}^D),\ Loc3D_i^{World}\right\}$ .

Les étapes A2 à A5 sont répétées pour les N couples d'images d'entrée.

Selon une variante des étapes précédentes, on collecte les données d'apprentissage à partir d'un ensemble d'images RGB-D acquises à partir d'une caméra calibrée. Ceci permet d'obtenir directement pour chaque image un nuage de points 3D dans un référentiel de la caméra. On obtient la pose de la caméra à l'aide d'une méthode géométrique de pose, de type « Structure for Motion », qui réalise une triangulation entre deux images 2D successives. Les points clés sont extraits de façon similaire à celle décrite précédemment. On détermine ensuite la localisation 3D des points clés dans le référentiel de la scène à l'aide de la pose obtenue.

A l'issue de l'étape A5, on dispose donc d'une collection de N.K échantillons d'apprentissage $\{E_{i,k}\}$.

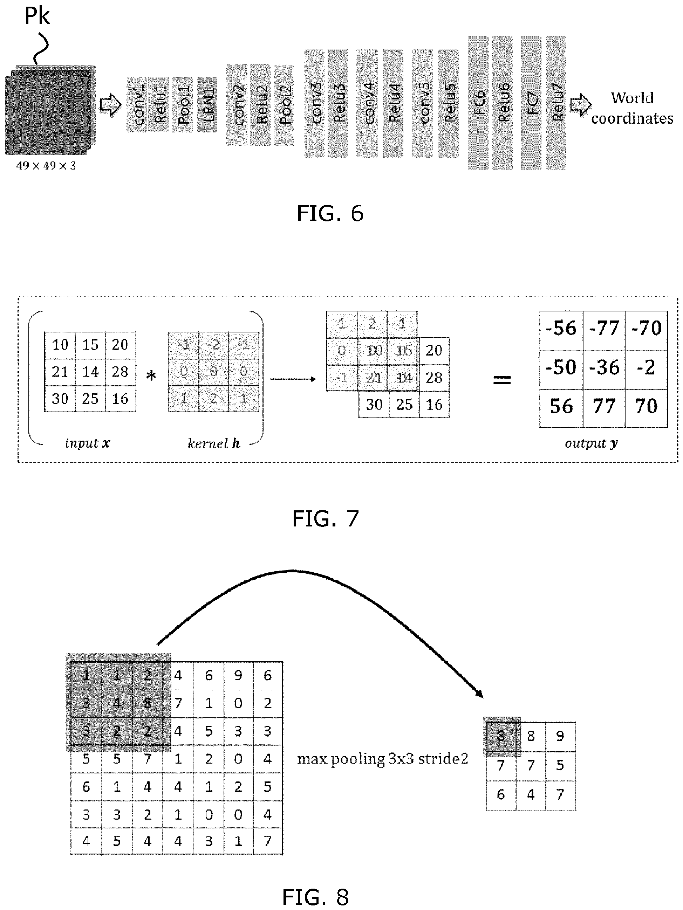

Au cours d'une étape A6, on présente cet ensemble de N.K échantillons $\{E_{i,k}\}$ en entrée d'un système de prédiction automatique. Dans cet exemple de réalisation de l'invention, il s'agit d'un réseau de neurones convolutif dont un exemple est illustré par la Figure **6.**

Ce réseau de neurones convolutif a été spécialement conçu pour prédire directement la localisation 3D des éléments de la pluralité d'imagettes issue d'une image RGB dans le référentiel de la scène, à partir de leur position 2D dans l'imagette. Il utilise uniquement des imagettes d'image RGB de dimensions fixes, par exemple égales à 49 × 49 pixels.

Les inventeurs ont constaté que les réseaux de neurones convolutifs connus, comme AlexNet, décrit par Krizhevsky et al. dans le document intitulé «Imagenet classification with deep convolutional neural networks,» publié dans la revue « *Advances in neural information processing systems* », en 2012, VGG-Net décrit par Simonyan et al., dans le document intitulé : «Very Deep Convolutional Networks for Large-Scale Image Récognition» publié dans *ICLR,* en 2014, GoogleNet décrit par Szegedy et al., dans un article intitulé «Going deeper with convolutions» publié dans les *Proceedings of the IEEE conference on computer vision and pattern recognition,* en 2015 ou ResNet décrit par He et al., dans un article intitulé «Deep residual learning for image recognition», publié dans les *Proceedings of the IEEE conference on computer vision and pattern recognition,* en 2016, sont conçus pour classifier des objets et ne conviennent pas au traitement de plusieurs imagettes, en en termes de temps de calcul, de l'ordre de 10 ms à quelques secondes par image). Ils sont généralement très profonds, c'est-à-dire qu'ils comprennent un nombre élevé de couches et de ce fait mettent en œuvre un nombre élevé de paramètres, comme illustré par le graphique de la Figure **5.** Une conséquence de cette complexité est un temps d'apprentissage élevé, de l'ordre de quelques semaines pour un million d'images.

Selon un mode de réalisation, l'invention propose un réseau neuronal convolutif léger, que l'on désignera par « xyzNet », pour localiser les K points d'intérêt d'une image d'entrée dans le système de coordonnées du monde. Ce réseau de neurones convolutif se compose, comme illustré par la Figure **6,** de cinq couches de convolution CONV qui constituent 5 étages successifs de la structure du réseau de neurones. Les deux premières couches de convolution sont suivies d'une couche dite « RELU » réalisant une opération non linéaire et d'une couche de sous-échantillonnage dite « POOL ». Seul le premier étage comprend, suite à la couche de sous-échantillonnage POOL une couche de normalisation de réponse dite « LRN ». Les 5 étages ainsi formés sont suivis de deux étages comprenant chacun une couche de connexion neuronale complète dite « FC » et d'une couche RELU. Pour superviser le réseau, on utilise une fonction de perte (pour « LOSS », en anglais) définie par une différence de distance euclidienne entre la la localisation 3D réelle d'un point d'intérêt (ou vérité) et sa localisation 3D prédite.

On décrit maintenant les différents types de couches de façon plus détaillée :

- CONV pour « Convolution » en anglais) : Chacune des cinq convolutions effectue une opération de filtrage spatiale avec ensemble de filtres de taille 3 × 3 (conv1 : 32 filtres ; conv2 : 64 filtres ; conv3, conv4, conv5 : 128 filtres). On décrit plus en détails une couche de convolution, en relation avec la Figure **7.** Il s'agit d'un bloc de base d'un réseau CNN, qui est utilisé pour extraire des caractéristiques des données d'entrée. Une couche comprend généralement plusieurs filtres. Un filtre est entraîné au cours de la phase d'apprentissage pour détecter une même caractéristique à différentes positions dans l'image d'entrée et produire une carte. Le produit de convolution de l'image *x* et le filtre *h* est définie par l'expression suivante.

$$y[m,\,n] = \; x[m,n] * h[m,n] = \sum_{j:-\infty}^{+\infty} \sum_{i:-\infty}^{+\infty} x[i,j].\,h[m-i,n-j]$$

- POOL *(pour « Pooling », en anglais) :* les deux couches de pooling permettent de réaliser un sous-échantillonnage avec une métrique basée sur la valeur maximum dans un voisinage de taille 3x3. Cette opération permet, d'un côté d'ajouter une forme d'invariance aux translations et aux rotations. D'un autre côté, elle réduit la quantité de paramètres permettant de définir les poids du réseau en question. La Figure **8** illustre cette opération.
- LRN *(pour « Local Response Normalization », en anglais),* est une opération permettant de normaliser la sortie d'une couche donnée (en imposant la moyenne à zéro et la déviation standard à 1) sur l'ensemble d'imagettes envoyées en parallèle pendant une itération (pour « batch », en anglais). L'importance de cette opération réside dans qualité de convergence de l'apprentissage du réseau. En effet, en normalisant, on réduit le taux de variabilité des données entre elles permettant un comportement plus restreint de l'optimisation de la fonction (par descente de gradient par exemple). Cette opération peut être formalisée de la manière suivante :

$$\mu_B = \frac{1}{m}\sum_{i=1}^{m} x_i$$

$$\sigma_B^2 = \frac{1}{m}\sum_{i=1}^{m}(x_i - \mu_B)^2$$

$$\hat{x}_i \leftarrow \frac{x_i - \mu_B}{\sqrt{\sigma_B^2 + \epsilon}}$$

$$y_i \leftarrow \gamma\hat{x}_i + \beta$$

Où $\mu_B$ représente la moyenne de toutes les imagettes du batch B, et $\sigma_B$ désigne la déviation standard relative au même batch. $\hat{x}_i$ représente le signal centré normalisé et $y_i$ définit le signal de sortie final shifté avec deux paramètres y et $\beta$ respectivement.

- FC ( pour « *Fully connected* », *en anglais)*, est une opération permettant de regrouper toutes les réponses neuronales obtenues à partir d'une donnée d'entrée initiale pour constituer une représentation encodée de cette donnée d'entrée. Notre réseau comporte deux couches FC (FC6, FC7). La première permet de constituer une représentation de dimension ($1\times1024$), et la deuxième reconstitue une représentation finale de même dimension que la localisation 3D qu'on veut régresser ou prédire, à savoir $1\times3$. Cette opération est, analytiquement, définie comme suit :

$$y_i = W.x_i + b^T$$

Où x et y représentent respectivement les représentations de la donnée à l'entrée et à la sortie de la couche FC respectivement, *W* définit les poids à apprendre au niveau de cette couche, et $b^T$ est le biais.

- RELU (pour « *Rectified Linear Unit* », *en anglais)*, est un opérateur non linéaire qui calcule les activations des neurones par une excitation donnée. Dans notre réseau, chaque convolution est suivie d'une couche relu pour introduire une non-linéarité importante dans le comportement du réseau et obtenir une meilleure discrimination. Cette rectification s'applique sur la fonction d'activation standard utilisée précédemment qui est par exemple la fonction sigmoïde représentée comme suit :

$$f(x) = \frac{1}{1 + e^{-x}}$$

Cette fonction représente une limitation importante pour la convergence de l'apprentissage. On peut la rectifier de la manière suivante :

$$f(x) = \max(0, x)$$

ce qui permet un résultat plus consistant et rapide en terme de convergence.

- Fonction de perte ou LOSS : Dans la phase d'apprentissage, les poids du réseau xyzNet sont appris en minimisant une fonction de perte d'objectif euclidienne avec un algorithme d'optimisation descendant gradient stochastique. La fonction de perte est alors définie comme suit:

$$loss = \sum_{k \in B} norm(loc3D_k^{world} - \widehat{loc3D_k^{world}})$$

Cette fonction de perte évalue la qualité de la localisation 3D prédite. Cette localisation se réduit à 3 coordonnées (x,y,z), ce qui la rend plus facile à optimiser que celle associée à un système de prédiction automatique de la pose de la caméra, du type « posenet », dont la donnée de sortie comprend 6 paramètres (3 translations et 3 rotations).

Dans ce mode de réalisation de l'invention, 500 imagettes sont extraites de chaque image avec la contrainte que deux imagettes ne se chevauchent pas plus de 70%. Les imagettes d'entraînement sont normalisées par soustraction de la valeur d'intensité moyenne de tous les imagettes.

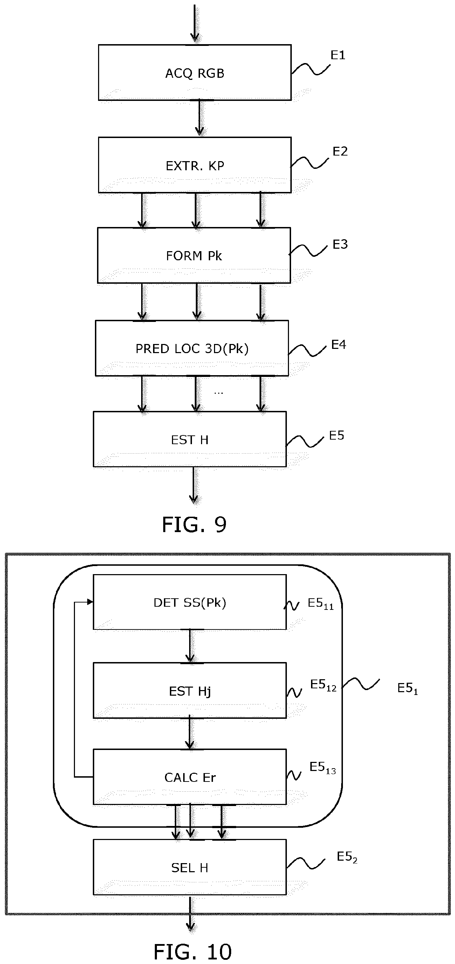

En relation avec la Figure 9, on décrit maintenant le procédé d'estimation de pose dans sa phase de test, selon un premier mode de réalisation de l'invention.

- Au cours d'une étape E1, on obtient une image d'entrée I acquise par une caméra RGB 2D, par exemple de dimensions VGA 640x480. Chaque élément d'image comprend 3 intensités R, G et B.

- Au cours d'une étape E2, on extrait de l'image I un nombre K prédéterminé, par exemple égal à 500, de points clés KP, par exemple selon la méthode SURF précédemment décrite.

- Au cours d'une étape E3, on forme autant d'imagettes ou patches $P_k$ que de points clés extraits, une imagette étant centrée sur un point clé $KP_k$ et de dimensions prédéterminées, par exemple égales à 49x49. A l'issue de cette étape, on dispose donc pour l'image I de K imagettes $P_k$ avec k entier compris entre 1 et K, à présenter en entrée du système de prédiction automatique, qui est dans cet exemple de réalisation, le réseau de neurones convolutif xyznet qui a subi la phase d'apprentissage précédemment décrite.

- Au cours d'une étape E4, les K imagettes $\{P_k\}$ sont traitées par le réseau xyznet, qui produit une prédiction de localisation 3D par imagette $P_k : \widehat{Loc3D_k^{World}}\left(x_k^{World}, y_k^{World}, z_k^{World}\right)$

- En E5, on estime la pose $H = [R|T]$ (R : rotation, T : translation) de l'image I à partir des K prédictions de localisation 3D des K imagettes extraites de l'image I.

Dans ce mode de réalisation, illustré par la Figure **10,** l'estimation de pose E5 est réalisée en générant en $E5_1$ plusieurs hypothèses de poses à partir de sous-ensembles choisis aléatoirement parmi les K localisations prédites par le système de prédiction automatique et en sélectionnant en $E5_2$ l'hypothèse de pose qui minimise une erreur de reprojection.

Plus précisément, la sous-étape $E5_1$ comprend :

- Une détermination aléatoire $E5_{11}$ d'un sous-ensemble SE de M avec 2<M<K points d'intérêt parmi les K points d'intérêt $KP_k$ de l'image courante;
- Un calcul $E5_{12}$ d'une hypothèse de pose Hi par mise en correspondance 2D/3D des positions 2D Loc2Dm des M points d'intérêt avec leurs localisations 3D Loc3Dm prédites. Seules les prédictions exactes de trois pixels sont théoriquement nécessaires pour déduire la pose de la caméra. On utilise avantageusement une méthode de vision par ordinateur bien connue et basée sur ce principe, à savoir l'algorithme Perspective-n-Points (PnP) ;
- Une évaluation d'une erreur de reprojection des localisations 3D des K points d'intérêt KP dans le référentiel de la scène à l'aide de l'hypothèse de pose H. Cette erreur est calculée comme suit :

$$Error(H) = \sum norm(Loc2D_k - reproj(\widehat{Loc3D_k^{World}}))$$

Ou *reproj* () est une fonction de reprojection 3D->2D définie comme suit :

$$reproj(X) = K.H^{-1}.X$$

Avec $H_n : \begin{pmatrix} R & t \\ 0 & 1 \end{pmatrix}$

Où R et t définissent la rotation et la translation de la caméra avec ses paramètres intrinsèques K.

On définit les points d'intérêts correctement prédits (pour « inliers », en anglais) en optimisant l'expression suivante : $\max_{H_i} \sum_{j \in B} \rho(\alpha_{ij})$ Où

$$\alpha_{ij} = norm(Loc2D - K.H_i^{-1}\widehat{Loc3D_j^{world}}) - \tau$$

On définit notre fonction $\rho$ comme suit :

$$\rho(\alpha) = \begin{cases} 1 \; if \; \alpha < 0 \\ 0 \; otherwise \end{cases}$$

$\tau$ est le seuil maximal d'erreur de reprojection qui définit les inliers.

Ces étapes sont itérées N fois, avec N entier non nul, selon un algorithme dit de Ransac (pour « Random Sample Access », en anglais).

En E5$_2$, on sélectionne parmi les hypothèses de pose $H_n$ la meilleure hypothèse de pose H parmi N obtenues, comme celle qui obtient l'erreur de reprojection Er la plus faible sur ses J points d'intérêts définis comme inliers.

La prise en compte des inliers seulement permet d'éliminer les prédictions bruyantes ou erronées fournies par le réseau de neurones convolutif.

Avantageusement, le nombre d'inliers associés à une hypothèse est utilisé pour évaluer une mesure de confiance associée à la pose de caméra estimée.

Par exemple, on la définit en considérant qu'un nombre d'inliers égal à 80 représente approximativement une erreur de translation de 5 cm et une erreur de rotation de 2 degrés en moyenne. Ces valeurs représentent un seuil de précision important en réalité augmentée. On associe de ce fait une mesure de confiance maximale de 100% à un nombre supérieur ou égal à 80 inliers.

Une telle mesure de confiance empirique permet d'injecter un aspect probabiliste à la méthode d'estimation de pose selon l'invention.

Un avantage de l'invention est de combiner l'apprentissage en profondeur de multiples imagettes avec une méthode de filtrage basée sur les algorithmes PnP et Ransac pour éliminer les outliers, par exemple localisés sur les objets en mouvement dans la scène ou encore les objets partiellement occultés.

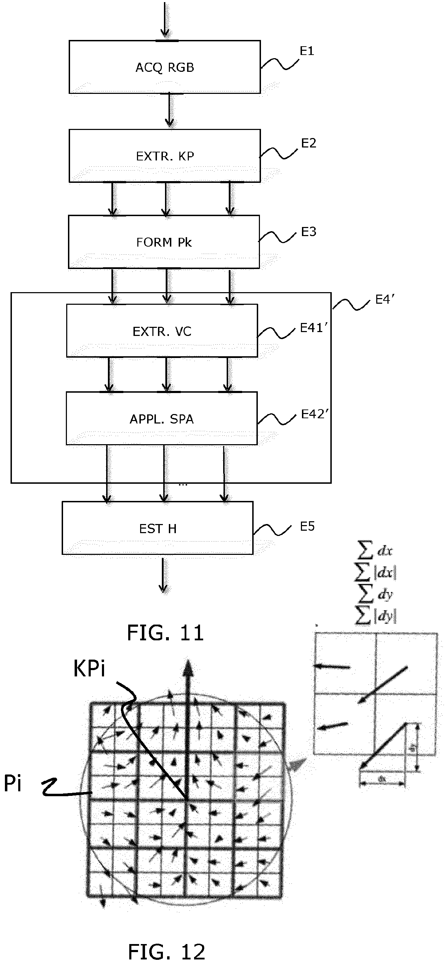

En relation avec la Figure **11**, on décrit maintenant le procédé d'estimation de pose selon un deuxième mode de réalisation de l'invention. Dans la phase de test, les étapes E1 à E3 sont inchangées par rapport au premier mode de réalisation décrit en relation avec la figure **9.**

On décrit maintenant une étape E4' de prédiction des localisations 3D des points clés extraits de l'image d'entrée. Selon ce deuxième mode de réalisation, elle comprend les sous-étapes suivantes :

- extraction E41' d'un vecteur de caractéristiques par imagette centrée sur un point clé ; et

- application E42' du système de prédiction automatique pour obtenir une pluralité de localisations 3D prédites par vecteur de caractéristiques extrait.

L'étape E5 d'estimation d'une pose de la caméra à partir de la pluralité de localisations 3D prédites est inchangée.

La sous-étape d'extraction d'un vecteur de caractéristiques par imagette peut être mise en œuvre de différentes façons. Dans tous les cas, un vecteur de caractéristiques VCi est extrait à partir d'une imagette centrée sur un point clé KPi par une fonction d'extraction $\Phi$, telle que :

$$VC_i = \phi(KP_{i)}$$

Selon une première option, la fonction $\phi$ réalise une extraction de caractéristiques invariantes à partir du point clé KPi de l'imagette Pi, par exemple selon une technique de type SURF déjà citée. On notera que selon cette première option, l'imagette Pi formée en E3 est généralement de dimensions 16x16. Elle constitue un voisinage du point clé KPi, qui est subdivisé en 16 cellules de 4x4 pixels. Pour chacune d'elles, on calcule les réponses horizontales et verticales d'ondelettes de Haar . *dx,dy* respectivement, ainsi que les valeurs absolues de ces réponses |*dx*|, |*dy.* On obtient ainsi un vecteur de 4 valeurs {*dx,* |*dx*|, *dy,* |*dy*|} par cellule. Il en résulte un vecteur de 64 caractéristiques qui décrivant de façon robuste une variabilité et une orientation des intensités des pixels dans le voisinage du point clé KPi. La figure 12 illustre visuellement un exemple de vecteur de caractéristiques obtenu avec la méthode SURF.

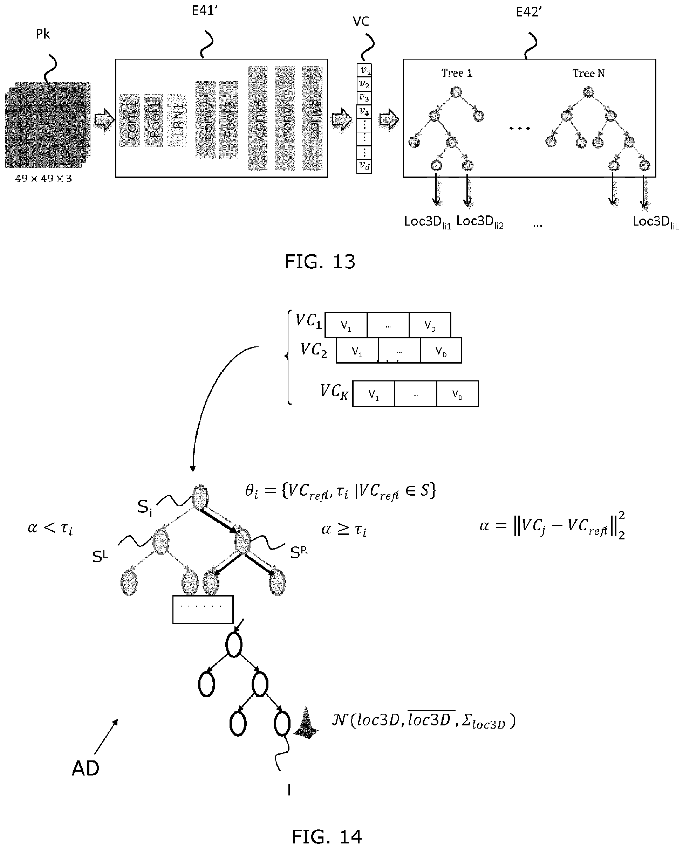

Selon une deuxième option, la fonction $\phi$ réalise une extraction de caractéristiques à l'aide d'un système de prédiction automatique supervisé. En relation avec la figure **13,** le système de prédiction automatique supervisé comprend par exemple un réseau de neurones à couches CNN2. Avantageusement, le réseau de neurones CNN2 comprend la pluralité de couches de convolution du réseau CNN1 décrit en relation avec le premier mode de réalisation, mais, contrairement au réseau de neurones CNN1, il ne comprend pas de couches de connexion FC. Par exemple, le vecteur de caractéristiques VCi obtenu comprend 2048 caractéristiques.

L'apprentissage du réseau de neurones CNN2 est avantageusement réalisé à partir d'un ensemble d'apprentissage décrit dans le premier mode de réalisation et à l'aide du réseau de neurones CNN1. Pour rappel, cet ensemble d'apprentissage associe à une pluralité d'imagettes d'entrée la pluralité de localisations 3D attendues, ou vérités terrain.

Une fois l'apprentissage réalisé, il suffit de supprimer les couches de connexion pour obtenir le réseau CNN2.

La sous-étape E42' applique avantageusement un système de prédiction automatique de type forêt décisionnelle aléatoire que l'on désignera dans la suite par « DeepForest. La technique de forêt décisionnelle aléatoire est connue de l'homme de métier et par exemple décrite dans le document de Shotton et al., intitulé « Scene Coordinate Regression Forests for Camera Relocalisation in RGB-D images », publié par la Conférence IEEE Conference on Computer Vision and Pattern Recognition, en 2013. L'invention, dans son deuxième mode de réalisation, adapte une forêt décisionnelle à la prédiction de localisation 3D de points clés d'une image 2D. Les spécificités de la forêt décisionnelle DeepForest vont maintenant être décrites en relation avec la Figure **14.**

Une forêt décisionnelle aléatoire comprend plusieurs arbres, typiquement M, avec M entier non nul.

Chaque arbre AD$_m$, avec m entier compris entre 1 et M, reçoit un sous-ensemble choisi de façon aléatoire d'une collection E d'échantillons d'apprentissage. Un arbre comprend des nœuds intermédiaires S, au niveau desquels il se sépare en deux branches, qui aboutissent à deux nœuds fils gauche respectivement droit S$^L$, S$^R$. Un test binaire simple h est réalisé à chaque nœud intermédiaire S. En fonction de son résultat, un échantillon de données et son étiquette ou vérité terrain associée, sont dirigés vers le nœud fils de gauche ou le nœud fils de droite.

Les paramètres θi du test binaire h appliqué au niveau d'un nœud Si sont générés aléatoirement au cours de l'apprentissage. A l'issue de cette phase, on choisit les valeurs de paramètres qui réalisent une séparation optimale des échantillons au niveau d'un nœud non feuille. Un critère est notamment qu'elle produise deux deux groupes homogènes d'un point de vue de leur valeur de localisation 3D.

Selon l'invention, un échantillon de données comprend un vecteur de caractéristiques VCk et son étiquette associée, à savoir la localisation Loc3D du point clé KPk correspondant dans le référentiel monde.

Classiquement, les échantillons d'entrée comprennent plusieurs composantes ou canaux de données et le test binaire s'applique à ddes données d'un canal choisi aléatoirement dans un échantillon. Il s'agit par exemple d'une différence entre deux valeurs pixels d'une image d'intensités.

Selon l'invention, on réalise le test binaire hi au niveau du nœud Si sur l'ensemble des composantes du vecteur de caractéristiques VC$_k$, de la façon suivante :

$$hi(VC_k,\theta i) = \begin{cases} 0, & si\ d(VC_{Refi},VC_k) < \tau_i\ Aller\ au\ noeud\ fils\ de\ gauche \\ 1 & sinon\ et\ aller\ au\ noeud\ fils\ de\ droite \end{cases}$$

Où $d(VC_{Refi},VC_k) = \left\|VC_{Refi} - VC_k\right\|_2^2$ est une distance Euclidienne, Refi un vecteur de caractéristiques de référence choisi aléatoirement dans l'ensemble d'apprentissage et $\tau_i$ un seuil généré aléatoirement pour le nœud Si et dont la valeur est optimisée au cours de l'apprentissage.

La forêt décisionnelle proposée par l'invention diffère de l'art antérieur, en ce qu'elle exploite l'intégralité des composantes du vecteur et les compare à un autre vecteur de l'ensemble de données d'entrées. Un avantage d'appliquer un test binaire intégral est qu'il permet de réaliser une discrimination plus fine des imagettes entre elles, du fait qu'elle s'appuie sur plus de caractéristiques.

Le vecteur de référence Ref$_i$ et le seuil $\tau_i$ font partie des paramètres θi du test binaire hi :

$$\theta_i = \left\{VC_{Refi},\tau_i\middle|ref_i \in E\right\}$$

Une supervision de l'apprentissage consiste à évaluer globalement toutes les séparations effectuées par les paramètres θi au niveau de chaque nœud Si non feuille à l'aide d'une fonction objective ou fonction de perte Q définie comme suit :

$$Q(S_i, \theta_i) = \sum_{d \in \{L, R\}} \frac{|S_i^d(\theta_i)|}{|S_i|} V(S_i^d(\theta_i))$$

Où L désigne l'ensemble des nœuds droits et R l'ensemble de nœuds gauches et $V(E) = \frac{1}{s} \sum_{m \in E} \|m - \overline{m}\|_2^2$ avec m les coordonnées Loc3D dans le repère monde associées au vecteur de caractéristiques et $\overline{loc3D}$ la moyenne des cordonnées Loc3D de l'ensemble E. d désigne la direction gauche L ou droite R de la séparation.

On cherche à minimiser la valeur de Q de façon à réduire la variance spatiale des localisations 3D stockées au niveau d'un nœud non feuille.

Plus la valeur de Q est faible, plus le sous-groupe de localisations 3D est compact. On recherche au niveau de chaque nœud non feuille Si le test optimal qui minimise Q et maximise ainsi une mesure de pureté du regroupement (pour « data clustering », en anglais) réalisé par le nœud Si.

Ce calcul est fait au niveau de chaque nœud intermédiaire d'un arbre de décision AD.

Les nœuds terminaux sont appelés feuilles I. L'arbre forme des groupes optimaux d'échantillons GO_I, avec I entier compris entre 1 et L, L étant le nombre de feuilles d'un arbre, qu'il stocke au niveau de ses feuilles.

Le processus d'apprentissage comprend une pluralité d'itérations au cours desquelles les valeurs de $VC_{refi}$ et $\tau_j$ sont choisies aléatoirement. Il se termine lorsque certaines conditions d'arrêt prédéterminées sont satisfaites, par exemple lorsque les données atteignent une profondeur maximale prédéterminée de l'arbre ou bien lorsque le nombre d'échantillons passe en-deçà d'un seuil permettant la création de feuilles.

Avantageusement, on peut introduire en outre une contrainte supplémentaire relative à l'élaboration d'un arbre équilibré. Ceci permet de réduire la profondeur de l'arbre et donc le temps de prédiction en phase de test.Pour ce faire on impose dans la partie haute de chaque arbre, une séparation du groupe d'échantillons au niveau d'un nœud Si en deux sous-groupes de tailles équivalentes à l'aide de paramètres θi de la forme suivante :

$$\theta_i = \{VC_{Refi}, \tau_i \mid |S_i^L| = |S_i^R|\}$$

Chaque nœud Si intermédiaire ou non feuille stocke en mémoire les paramètres optimaux θi* pour le test séparateur binaire hi* qu'il applique aux données.

Chaque feuille I stocke une distribution gaussienne de toutes les localisations 3D comprises dans son groupe optimal, qui s'exprime de la façon suivante :

$$N(loc3D, \overline{loc3D}, \Sigma_{loc3D})$$

Où m désigne le groupe de localisations 3D stocké par le feuille, $\overline{loc3D}$ désigne la moyenne des localisations 3D stockées par la feuille I et $\Sigma_{loc3D}$ la matrice 3x3 de leur covariance. A l'issue de la phase d'apprentissage qui vient d'être décrite, chaque feuille des M arbres de décision $AD_m$ de la forêt stocke la distribution Gaussienne des localisations 3D de son groupe optimal.

Dans une phase de test, chaque vecteur de caractéristiques VCj associé à un point clé KPj d'une imagette Pj d'une image I traverse la forêt décisionnelle aléatoire. Elle est traitée en parallèle par chaque arbre ADm. Le vecteur est dirigé par les tests binaires successifs jusqu'à une feuille I de chaque arbre ADm. La localisation 3D prédite par cet arbre correspond à la distribution gaussienne stockée dans cette feuille. L'ensemble de prédictions de localisations 3D obtenu par la forêt correspond à l'ensemble des localisations prédites par chaque arbre.

On notera que pour les scènes contenant des motifs répétitifs, il peut être difficile d'obtenir une localisation précise des imagettes dans le repère monde. Néanmoins, la méthode de l'invention produit un ensemble de localisations possibles pour résoudre une telle ambiguïté. En outre, la matrice de covariance $\Sigma_{loc3D}$ disponible au niveau de chaque feuille fournit une information de précision associée à chaque prédiction de localisation 3D. Cette mesure est ensuite exploitée au cours d'une étape E5' d'estimation d'une pose de la caméra à partir des localisations 3D prédites.

Selon ce deuxième mode de réalisation de l'invention et en relation avec la Figure **10** déjà décrite, l'étape d'estimation de pose comprend une sous-étape E50' de filtrage des localisations 3D prédites par les M arbres de la forêt décisionnelle. Avantageusement, pour chacune des K imagettes de l'image d'entrée, cette sous-étape compare la trace de la matrice de covariance $\Sigma_{loc3D}$ associée à la localisation 3D prédite par un arbre $AD_m$ à un seuil $\tau_{cov}$ prédéterminé et la supprime si la trace de la matrice de covariance associée est supérieure ou égale au seuil $\tau_{cov}$. Par exemple, $\tau_{cov}$ est choisi égal à 0.05. Sinon, on conserve la moyenne $\overline{loc3D}$ de la distribution gaussienne de cette prédiction, car la distribution gaussienne de la prédiction produite par l'arbre est suffisamment compacte.

De la sorte, à l'issue de cette sous-étape, on dispose d'un sous-ensemble des K.M moyennes $\overline{loc3D}$ des localisations 3D prédites que l'on transmet aux sous-étapes E51 de génération d'une pluralité d'hypothèses de poses à partir de sous-ensembles choisis aléatoirement parmi les localisations prédites par le système de prédiction automatique et de sélection E5$_2$ de l'hypothèse de pose qui minimise une erreur de reprojection. Ces sous-étapes restent inchangées par rapport au premier mode de réalisation.

On présente maintenant des mesures de performances du procédé d'estimation de pose selon l'invention dans ses différents modes de réalisation.

On considère 7 scènes distinctes à l'échelle d'une pièce. Ces scènes comportent des trajectoires géométriquement complexes comportant des rotations pures, des changements brusques de direction et des mouvements rapides de la caméra.

Chaque scène comprend des séquences qui sont capturées autour d'une seule pièce et annotées en utilisant Kinect Fusion, comme précédemment décrit.

On considère en outre la base de données CORBS décrite dans le document de Wasenmüller et al., intitulé « Corbs : Comprehensive RGB-D Benchmark for SLAM using Kinect v2 », publié par la conférence Applications of Computer Vision, en 2016, pages 1-7. Elle comprend un ensemble de données annotées de façon plus précise grâce à un système de capteurs multiples. Les données visuelles sont archivées à l'aide d'un Kinect v2. La vérité terrain pour la trajectoire est obtenue par un système de capture de mouvement externe. Chaque scène contient un modèle de scène 3D dense obtenu via un scanner 3D externe. Les images considérées sont ici de dimensions 640x480 pixels.

Table 1

| Scène | PoseNet-1 | PoseNet-2 | xyzNet | Deep-Forest | SURF-Forest |
|---|---|---|---|---|---|
| **Chess** | 0,32m-8.12° | 0,13m-4.48° | 0,18m-4.80° | **0,03m-1.40°** | 0,03m-1.45° |
| **Fire** | 0,47m-14.41° | 0,27m-11.31° | 0,21m-6.72° | **0,02m-1.16°** | 0,03m-1.34° |
| **Heads** | 0,29m-12.02° | 0,17m-13.03° | 0,15m-8.08° | 0,03m-1.79° | **0,02m-1.32°** |
| **Office** | 0,48m-7.68° | 0,19m-5.55° | 0,42m-9.59° | 0,05m-1.96° | **0,04m-1.70°** |
| **Pumpkin** | 0,47m-8.42° | 0,26m-4.47° | 0,17m-4.18° | **0,05m-1.60°** | 0,05m-1.70° |
| **Red Kitchen** | 0,59m-8.84° | 0,23m-5.35° | 0,20m-4.65° | **0,03m-1.15°** | 0,05m-1.97° |
| **Stairs** | 0,47m-13.81° | 0,35m-12.41° | 0,19m-4.63° | **0,06m-1.48°** | 0,07m-2.05° |
| **Moyenne** | 0,44m-10.43° | 0,23m-8.13° | 0,22m-6.09° | **0,04m-1.51°** | 0,04m-1.65° |

La table 1 compare les performances en termes de précision du procédé d'estimation de pose à celles des méthodes de l'art antérieur pour 7 scènes. Les résultats présentés comprennent la moyenne de l'erreur de translation en cm et l'erreur de rotation en degrés. Le terme « xyznet » désigne le premier mode de réalisation de l'invention, le terme « SURF-Forest » désigne le deuxième mode de réalisation option 1, c'est-à-dire avec extraction de caractéristiques basée SURF et le terme « Deep-Forest » désigne le deuxième mode de réalisation option 2, c'est-à-dire avec extraction de caractéristiques basée sur CNN.

On constate que le procédé selon le premier mode de réalisation de l'invention donne en moyenne des résultats plus précis que l'art antérieur, mais qu'il est moins performant sur certaines scènes telles que « Office « ou « Chess », qui contiennent des motifs répétitifs. Le deuxième mode de réalisation en revanche est toujours plus performant que l'art antérieur et que le premier mode de réalisation de l'invention. Ceci s'explique notamment par la production d'une pluralité de localisations 3D prédites par imagette, qui est ensuite filtrée à l'aide de la mesure de covariance puis exploitée par les algorithmes Ransac et PnP pour estimer la pose de la caméra.

Table 2

| Temps de traitement | Extraction points clés | Extraction vecteur de caractéristiques | Prédiction des localisations 3D | Estimation de la pose de la caméra | Total |
|---|---|---|---|---|---|
| **xyzNet** | 10 ms | 0 ms | 25 ms | 25 ms | 60 ms |

(suite)

| Temps de traitement | Extraction points clés | Extraction vecteur de caractéristiques | Prédiction des localisations 3D | Estimation de la pose de la caméra | Total |
|---|---|---|---|---|---|
| Deep-Forest | 10 ms | 25 ms | 20 ms | 25 ms | 80 ms |
| SURF-Forest | 10 ms | 5 ms | 10 ms | 25 ms | 50 ms |

La table 2 compare les temps de traitement des différents modes de réalisation de l'invention. On constate que le deuxième mode de réalisation option 1 (SURF-Forest) est le plus rapide en termes de temps de traitement, grâce à des temps d'extraction de caractéristiques et de prédiction réduits.

Le deuxième mode de réalisation option 2 (Deep-Forest) est le plus coûteux en temps de calcul, mais il reste temps réel. Le temps de traitement augmente linéairement avec les dimensions des images.

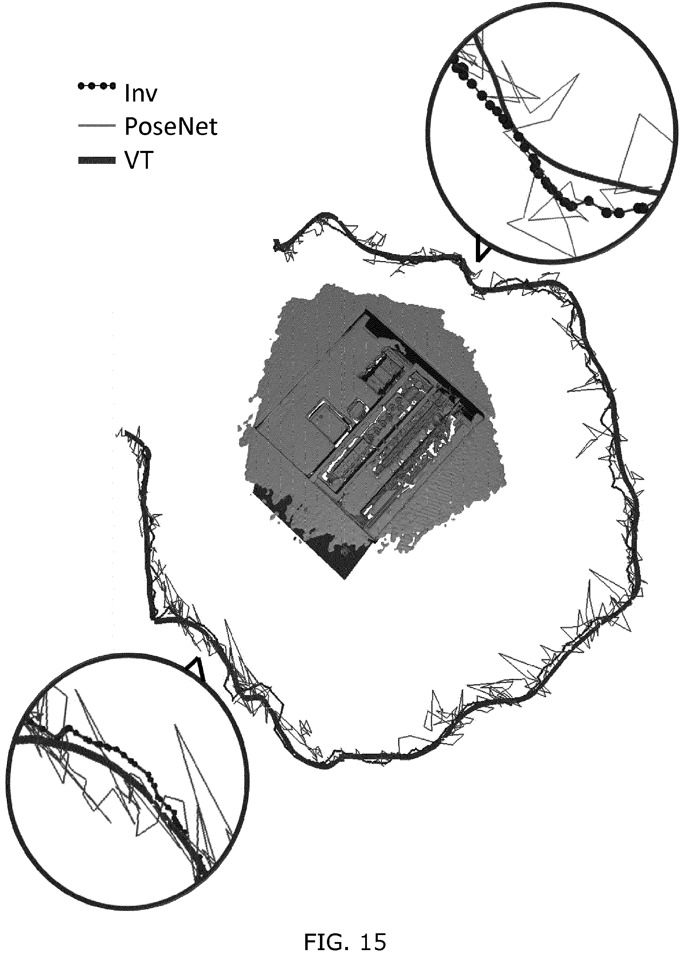

En relation avec la Figure **15**, on présente une reconstruction de la trajectoire TE de la caméra à partir des poses estimées selon l'invention et on la compare visuellement à celle TVT de la vérité terrain. L'écart observé entre les deux trajectoires correspond à l'erreur d'estimation de l'ordre de quelques centimètres.

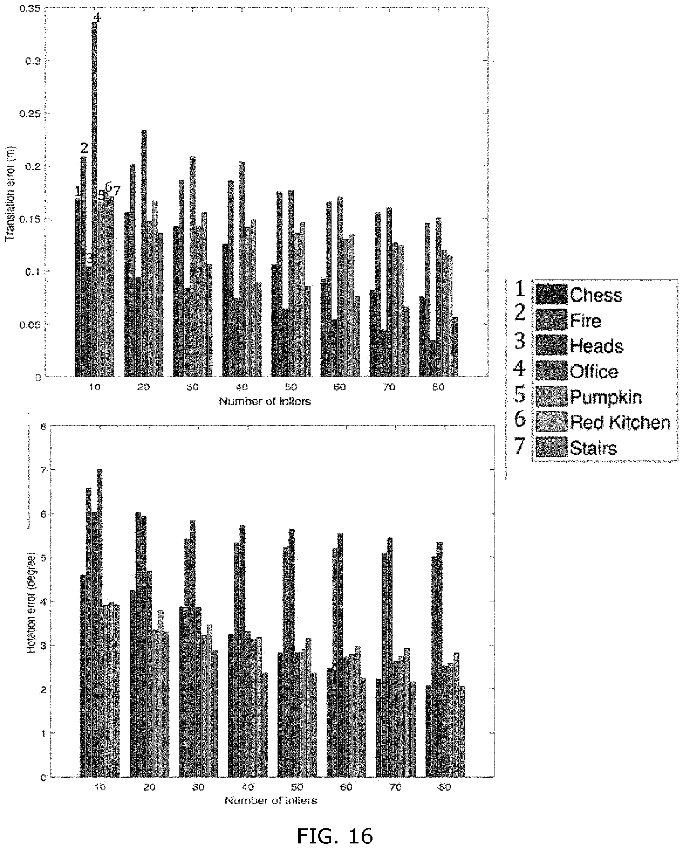

En relation avec la Figure **16**, on illustre l'impact du nombre d'inliers sur la précision de la pose estimée. Elle montre la relation proportionnelle entre le nombre d'inliers et la précision sur l'estimation de la pose de la pose. Pour une scène donnée, par ex « Chess » l'erreur pour la translation est de 0.17 cm pour 10 inliers contre 0.07cm pour 80 inliers. Ce résultat est directement à la minimisation de l'erreur par PnP qui estime une meilleure hypothèse de pose de la caméra avec un plus grand nombre d'inliers.

Ceci confirme le fait que le nombre d'inliers est une information pertinente pour définir une mesure de confiance de l'estimation de pose de caméra réalisée.

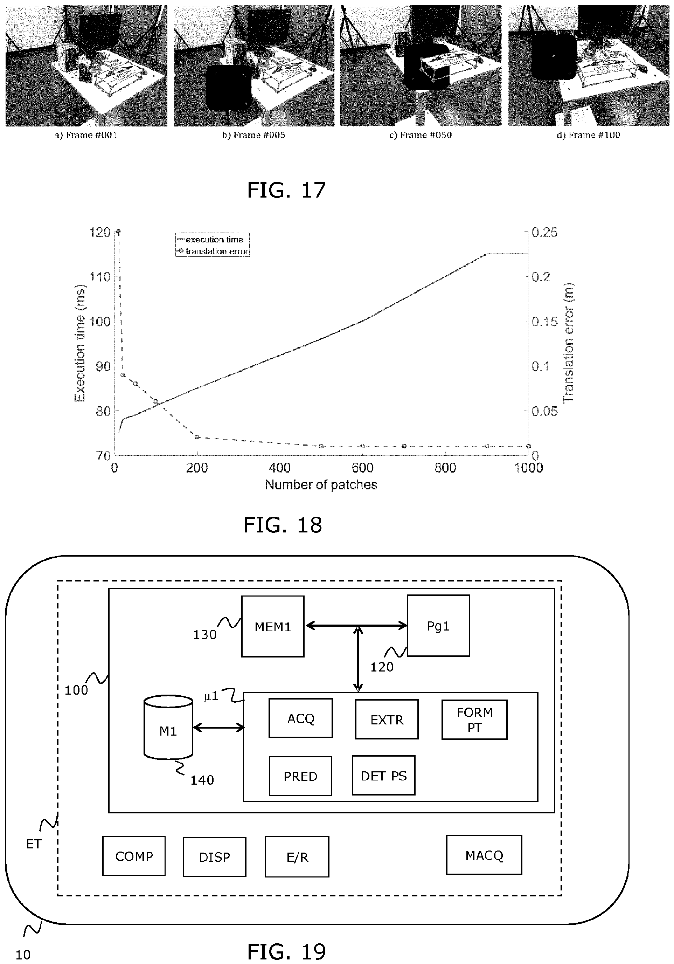

En relation avec la figure **17**, on illustre la capacité du procédé selon l'invention à traiter une occultation partielle. Pour ce faire, on présente des images d'entrée dégradées comprenant une zone rectangulaire noire ZRN de taille 200x200. La zone change de position d'une image à l'autre. On constate que quelle que soit la position de la zone de masquage, l'estimation de la pose de la caméra reste correcte. En effet, on constate que l'objet synthétique OS en forme de parallélépipède rectangle reste inséré correctement dans la scène quelle que soit la position de la zone de masquage ZRN.

Ces bons résultats s'expliquent par le fait que le procédé selon l'invention s'appuie sur des points inliers correctement prédits et issus d'imagettes localisées en dehors de la zone dégradée. Cette approche non dense (pour « sparse », en anglais) apporte une robustesse de la solution à une occlusion partielle de l'image et permet de continuer à fournir une estimation robuste et précise de la pose de la caméra alors que l'image d'entrée est visuellement fortement dégradée.

On notera que le résultat obtenu sera probablement associé à une mesure de confiance plus faible du fait d'un nombre plus réduit d'inliers.

Le problème d'occultation partielle étant très fréquent dans les scènes réelles, la robustesse de l'approche selon l'invention est un atout pour le d'un environnement dynamique.

En relation avec la figure **18,** on présente le temps de calculs de prédiction en fonction du nombre d'imagettes extraites. Elle illustre également l'impact du nombre de patches utilisé sur la qualité de la prédiction. Environ 130 imagettes produisent une erreur d'environ 0.05m pour un temps d'éxécution de 80ms correspondant à environ 13 fps. Ce temps d'exécution est court ce qui démontre la faible complexité de l'approche selon l'invention de notre approche due directement à l'architecture du réseau de neurones convolutif permettant un temps d'inférence rapide et une discrimination et généralisation suffisante pour une bonne localisation 3D.

L'invention propose ainsi une approche basée sur un réseau de neurones convolutif qui permet d'estimer de façon régressive la localisation 3D de points d'une image 2D acquise par une caméra RGB dans un environnement non contraint. Contrairement à l'art antérieur, les échantillons d'apprentissage sont collectés de façon non dense sous la forme d'une pluralité d'imagettes centrées sur des points clés d'une image d'intensités acquise par la caméra. Les résultats obtenus, notamment en termes d'erreurs en translation et rotation réalisées sur des bases de données publiques valident cette approche et montrent notamment qu'elle est plus précise que les méthodes de l'art antérieur, tout en restant temps réel et simple à configurer.

On notera que l'invention qui vient d'être décrite, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).

En relation avec la Figure **19,** on présente maintenant un exemple de structure simplifiée d'un dispositif 100 d'estimation de pose d'une caméra selon l'invention. Le dispositif 100 met en œuvre le procédé d'estimation de pose selon l'invention qui vient d'être décrit.

Cette Figure **19** illustre seulement une manière particulière, parmi plusieurs possibles, de réaliser l'algorithme détaillé ci-dessus. En effet, la technique de l'invention se réalise indifféremment sur une machine de calcul reprogrammable (un ordinateur PC, un processeur DSP ou un microcontrôleur) configurée pour exécuter un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Par exemple, le dispositif 100 comprend une unité de traitement 110, équipée d'un processeur $\mu 1$, et pilotée par un programme d'ordinateur Pg1 120, stocké dans une mémoire 130 et mettant en œuvre le procédé de selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en œuvre les étapes du procédé décrit précédemment, selon les instructions du programme d'ordinateur 120.

Dans cet exemple de réalisation de l'invention, le dispositif 100 comprend une machine de calcul reprogrammable ou une machine de calcul dédiée, apte à et configurée pour :

- Obtenir ACQ une image d'intensités de couleur de la scène capturée par la caméra, dite image courante ;

- Extraire EXTR une pluralité de points d'intérêt de l'image courante, un dit point étant invariant par transformation géométrique de l'image ;

- Former FORM PT une pluralité d'imagettes dans l'image d'intensités de couleur, une imagette comprenant un point d'intérêt de la pluralité extraite;

- Prédire PRED des localisations 3D des points d'intérêt de la pluralité d'imagettes dans un référentiel de la scène, par application d'un système de prédiction automatique, ledit système ayant été entraîné à l'aide d'un ensemble d'apprentissage comprenant des imagettes issues d'une pluralité d'images de la scène acquises par la caméra depuis une pluralité de points de vue, une imagette étant associée à une position 2D de son point d'intérêt dans un référentiel de l'image et à une position 3D de son point d'intérêt dans le référentiel de la scène;

- Estimer EST H une pose de la caméra pour l'image courante, par mise en correspondance des positions 2D de la pluralité de points d'intérêt et de reprojections dans le référentiel de l'image courante des localisations 3D prédites.

Avantageusement, la machine de calcul est configurée pour mettre en œuvre les modes de réalisation de l'invention qui viennent d'être décrits en relation avec les Figures **1, 9 et 11.**

En particulier, elle est en outre apte à mettre en œuvre la phase d'apprentissage et la phase de test du système de prédiction automatique selon l'invention telles que précédemment décrites. Elle est alors configurée pour :

- Obtenir un ensemble d'apprentissage comprenant une pluralité de d'images d'intensité de couleur de la scène acquises par la caméra, depuis une pluralité de points de vue, un point de vue étant associé à une pose connue de la caméra;

- Extraire une pluralité de points d'intérêt de ladite image d'intensités de couleurs, un dit point étant associé à une position 2D dans l'image d'intensités et à une profondeur dans l'image de profondeur ;

- Obtenir des localisations 3D de la pluralité de points d'intérêt dans le référentiel de la scène;

- Entraîner le système automatique de prédiction de pose à partir des couples d'imagettes, un couple d'imagettes étant associé à la position 2D de son point d'intérêt dans un référentiel de l'image et à la localisation 3D de son point d'intérêt dans le référentiel de la scène.

Le dispositif 100 comprend en outre une unité $M_1$ 140 de stockage, telle qu'une mémoire, par exemple de type mémoire tampon (pour « buffer », en anglais), apte à stocker par exemple les localisations 3D prédites de la pluralité de points clés et/ou les hypothèses de pose Hn estimées et les point inliers obtenus selon la technique PnP - Ransac décrite en relation avec la Figure **10**.

Ces unités sont pilotées par le processeur $\mu$1 de l'unité de traitement 110.

De façon avantageuse, un tel dispositif 100 d'estimation de pose peut être intégré à un système 10 de réalité augmentée.

Un tel système 10 comprend, en plus du dispositif 100, au moins un module d'acquisition MACQ d'images d'entrée, comprenant par exemple une caméra RGB apte à capturer une image d'une scène réelle, un module d'annotation ANNOT apte à produire des localisations 3D de points d'intérêt des images, un module de composition COMP apte à composer une image de sortie, dite « augmentée » à partir d'une image d'entrée de la scène acquise par la caméra et au moins un objet réel ou virtuel, comme illustré par la Figure 14, à l'aide d'une position initiale dudit au moins un objet dans la scène et d'une pose estimée de la caméra et un module DISP d'affichage apte à restituer l'image de sortie.

Selon une variante, le dispositif 100, une fois entraîné, peut être intégré à un équipement terminal ET, par exemple un ordinateur personnel, qui peut être mobile, comme une tablette ou un téléphone intelligent (pour « smartphone », en anglais), est lui-même compris dans le système 10.

Le dispositif 100 est alors agencé pour coopérer au moins avec les modules suivants du système 10 ou de l'équipement terminal ET:

- un module E/R d'émission/réception de données, par l'intermédiaire duquel une image RGB est obtenue, par exemple en provenance d'une base de données distante; et/ou

- le module d'acquisition MACQ de la séquence d'images d'entrée, tel que par exemple une caméra vidéo RGB, par exemple via un câble HDMI ;

- le module d'annotation ANNOT apte à produire les localisations 3D de la pluralité de points d'intérêt extraits d'une image d'entrée, par exemple de type kinectfusion® ;

- le dispositif d'affichage DISP, configuré pour restituer une composition d'une image RGB 2D avec la scène 3D virtuelle ou réelle à l'aide de la pose estimée de la caméra.

Grâce à ses bonnes performances et à sa simplicité de mise en œuvre, l'invention qui vient d'être décrite permet plusieurs usages. Une première application est d'augmenter la réalité d'une scène filmée par la caméra RGB-D, en y injectant des objets supplémentaires, virtuels ou réels. On connait par exemple une application de décoration intérieure, qui permet à un client de tester virtuellement l'agencement d'un mobilier dans une pièce de son appartement, avant se décider à l'achat. Cette application nécessite une estimation de la pose de la caméra dans un référentiel de la pièce, de façon à localiser l'image qu'elle acquiert dans la scène et à y insérer, lors de leur restitution sur un dispositif d'affichage, le mobilier virtuel avec les bonnes dimensions et la bonne perspective. Une position spatiale du mobilier virtuel est initialisée dans la scène. Elle nécessite une connaissance a priori d'une structure 3D de la pièce. Ensuite, un suivi de la trajectoire de la caméra est réalisé en estimant sa pose dans un référentiel de la scène selon l'invention, ce qui permet, pour chaque nouvelle image acquise, de projeter le mobilier virtuel dans la scène, à la bonne position et avec la bonne perspective. Avec l'invention, du fait que le traitement est moins complexe et ne nécessite pas dans sa phase de test de caméra de profondeur, il devient envisageable de mettre en œuvre cette application sur un équipement terminal mobile, de type tablette ou téléphone intelligent (pour « smartphone », en anglais).

Une deuxième application envisagée est l'assistance d'un opérateur de maintenance, par exemple d'avions. On suppose qu'il acquiert une image de pièces du moteur à partir d'un équipement terminal mobile, de type tablette. Le système selon l'invention lui permet, dans sa phase de test, d'estimer la pose de la caméra dans la scène constituée par le moteur de l'avion à partir de l'image courante. La connaissance au préalable de la structure 3D du moteur permet d'initialiser un rendu d'informations supplémentaires relatives à une de ses pièces. Par exemple, on affiche une référence du modèle, des informations relatives à sa qualité, une date d'installation etc. Avec l'invention, il est possible de suivre la trajectoire de la caméra et d'estimer sa pose à chaque nouvelle image acquise. De cette manière, les informations supplémentaires sont projetées dans chaque nouvelle image acquise par la caméra avec la bonne perspective, ce qui garantit de maintenir au cours du temps un réalisme du rendu de la scène vue par la caméra.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention telle que décrite par les revendications.

**Revendications**

1. Procédé d'estimation de pose d'une caméra dans un référentiel d'une scène tridimensionnelle, comprenant les étapes suivantes :

   - Obtention (E1) d'une image d'intensités de couleur de la scène capturée par la caméra, dite image courante ;
   - Extraction (E2) d'une pluralité de points d'intérêt de l'image courante, un dit point étant invariant par transformation géométrique de l'image ;
   - Formation (E3) d'une pluralité d'imagettes dans l'image d'intensités de couleur, une imagette comprenant un point d'intérêt de la pluralité extraite;
   - Prédiction (E4) des localisations 3D des points d'intérêt de la pluralité d'imagettes dans un référentiel de la scène, par application d'un système de prédiction automatique, ledit système ayant été entraîné à l'aide d'un ensemble d'apprentissage comprenant des imagettes issues d'une pluralité d'images de la scène acquises par la caméra depuis une pluralité de points de vue, une imagette étant associée dans ledit ensemble à une position 2D de son point d'intérêt dans un référentiel de l'image et à une position 3D de son point d'intérêt dans le référentiel de la scène, ladite étape de prédiction comprenant une extraction d'un vecteur de caractéristiques par imagette, l'application du système de prédiction automatique prédisant une pluralité de localisations 3D par vecteur de caractéristiques extrait ;
   - Estimation (E5) d'une pose de la caméra pour l'image courante, par mise en correspondance des positions 2D de la pluralité de points d'intérêt et de reprojections dans le référentiel de l'image courante des localisations 3D prédites ; le système de prédiction automatique comprenant une forêt aléatoire décisionnelle, comprenant des arbres de décision, un arbre de décision comprenant des nœuds séparateurs, undit nœud étant apte à séparer de façon binaire un groupe de vecteurs de caractéristiques issu d'un nœud amont en sous-groupes, à transmettre les sous-groupes à des nœuds séparateurs aval et des nœuds feuilles, aptes à stocker les localisations 3D des imagettes associées à un sous-groupe reçu d'un nœud séparateur amont, ledit procédé étant **caractérisé en ce qu'**il comprend dans une phase préalable une étape (A4) d'entraînement du système de prédiction comprenant un test de séparation binaire basé sur un calcul de distance entre le vecteur de caractéristiques extrait d'une imagette de l'ensemble d'apprentissage et un vecteur de caractéristiques de référence ($VC_{refi}$) choisi aléatoirement dans l'ensemble d'apprentissage et une comparaison de la distance calculée par rapport à un seuil prédéterminé.

2. Procédé d'estimation de pose d'une caméra selon la revendication **1, caractérisé en ce que** l'extraction du vecteur de caractéristiques comprend une prédiction du vecteur de caractéristiques par application d'un deuxième système de prédiction automatique, ledit système ayant été entraîné à l'aide d'un ensemble d'apprentissage comprenant des imagettes issues d'une pluralité d'images de la scène acquises par la caméra depuis une pluralité de points de vue, une imagette étant associée dans ledit ensemble à une position 2D de son point d'intérêt dans un référentiel de l'image et à une position 3D de son point d'intérêt dans le référentiel de la scène.

3. Procédé d'estimation de pose d'une caméra selon la revendication **2, caractérisé en ce que**, le deuxième système de prédiction automatique comprenant un réseau de neurones (CNN2) comprenant plusieurs couches de convolution, le procédé comprend dans une phase préalable une étape d'entraînement du deuxième système à partir de l'ensemble d'apprentissage, après ajout audit réseau de neurones d'une pluralité de couches de connexion agencées à la suite des couches de convolution.

4. Procédé selon la revendication 1, **caractérisé en ce que** la phase préalable d'apprentissage comprend une étape d'obtention (A4) de localisations 3D de la pluralité de points d'intérêt dans le référentiel de la scène, dites de vérité terrain par triangulation géométrique des positions 2D du point dans l'image et dans une image précédente.

5. Procédé selon la revendication 1, **caractérisé en ce que** la phase préalable d'apprentissage comprend une étape d'acquisition d'une image de profondeur associée à une image d'intensité, l'ensemble d'apprentissage comprend en outre l'image de profondeur associée à l'image d'intensité, une étape d'obtention (A4) de localisations 3D de la pluralité de points d'intérêt dans le référentiel de la scène, dites de vérité terrain par projection perspective de leurs position 2D et profondeur à l'aide d'un modèle prédéterminé de la caméra et de la pose connue, dans le référentiel de la scène.

6. Procédé d'estimation de pose d'une caméra selon l'une quelconque des revendications précédentes, **caractérisé en ce que** l'estimation de pose comprend la mise en œuvre d'au moins une itération des sous-étapes suivantes :

- Détermination (E5$_1$) d'un sous-ensemble de la pluralité de points d'intérêt ;
- Calcul (E5$_2$) d'au moins une hypothèse de pose à partir des localisations 3D prédites pour le sous-ensemble et des positions 2D correspondantes; et
- Evaluation (E5$_3$) d'une erreur de reprojection des positions 2D de la pluralité de points d'intérêt dans le référentiel de la scène à l'aide de l'hypothèse de pose calculée par rapport aux localisations 3D prédites ;

et **en ce qu'**elle comprend une sélection (E6) de l'hypothèse de pose qui minimise l'erreur de reprojection.

**7.** Procédé selon la revendication **6, caractérisé en ce qu'**une mesure de confiance de la pose estimée est évaluée au moins en fonction d'un nombre de points d'intérêt, pour lesquels l'erreur de reprojection est inférieure à un seuil prédéterminé.

**8.** Procédé selon l'une des revendications **6** ou **7, caractérisé en ce que**, la pluralité de localisations 3D prédites par la forêt comprenant une distribution de localisations 3D prédites par arbre, unedite distribution étant associée à une mesure de covariance, l'étape d'estimation (E5) comprend une sous-étape préalable (E5$_0$) de filtrage de la pluralité de distributions de localisations 3D prédites par comparaison de la mesure de covariance associée une distribution à un seuil ($\tau_{cov}$) prédéterminé et suppression de la distribution prédictions dont la mesure de covariance est supérieure ou égale audit seuil.

**9.** Dispositif (100) d'estimation de pose d'une caméra dans un référentiel d'une scène tridimensionnelle, ledit dispositif comprenant une machine de calcul dédiée à ou configurée pour :

- Obtenir une image d'intensités de couleur de la scène capturée par la caméra, dite image courante ;
- Extraire une pluralité de points d'intérêt de l'image courante, un dit point étant invariant par transformation géométrique de l'image ;
- Former une pluralité d'imagettes dans l'image d'intensités de couleur, une imagette comprenant un point d'intérêt de la pluralité extraite;
- Prédire des localisations 3D des points d'intérêt de la pluralité d'imagettes dans un référentiel de la scène, par application d'un système de prédiction automatique, ledit système ayant été entraîné à l'aide d'un ensemble d'apprentissage comprenant des imagettes issues d'une pluralité d'images de la scène acquises par la caméra depuis une pluralité de points de vue, une imagette étant associée à une position 2D de son point d'intérêt dans un référentiel de l'image et à une position 3D de son point d'intérêt dans le référentiel de la scène, ladite prédiction comprenant une extraction d'un vecteur de caractéristiques par imagette, l'application du système de prédiction automatique prédisant une pluralité de localisations 3D par vecteur de caractéristiques extrait;
- Estimer une pose de la caméra pour l'image courante, par mise en correspondance des positions 2D de la pluralité de points d'intérêt et de reprojections dans le référentiel de l'image courante des localisations 3D prédites, le système de prédiction automatique comprenant une forêt aléatoire décisionnelle, comprenant des arbres de décision, un arbre de décision comprenant des nœuds séparateurs, undit nœud étant apte à séparer de façon binaire un groupe de vecteurs de caractéristiques issu d'un nœud amont en sous-groupes, à transmettre les sous-groupes à des nœuds séparateurs aval et des nœuds feuilles, aptes à stocker les localisations 3D des imagettes associées à un sous-groupe reçu d'un nœud séparateur amont,

ledit dispositif étant **caractérisé en ce qu'**il est configuré pour mettre en œuvre un entraînement préalable du système de prédiction comprenant un test de séparation binaire basé sur un calcul de distance entre le vecteur de caractéristiques extrait d'une imagette de l'ensemble d'apprentissage et un vecteur de caractéristiques de référence (VC$_{refi}$) choisi aléatoirement dans l'ensemble d'apprentissage et une comparaison de la distance calculée par rapport à un seuil prédéterminé.

**10.** Système (10) de réalité augmentée comprenant :

- une caméra (MACQ) apte à acquérir une image d'intensités de couleurs d'une scène tridimensionnelle réelle,
- un module (COMP) de composition d'images apte à composer une image de sortie à partir d'une image d'entrée acquise de la scène par la caméra et au moins un objet réel ou virtuel, à l'aide d'une localisation 3D initiale dudit au moins un objet dans la scène et d'une pose estimée de la caméra,
- un module (DISP) d'affichage apte à restituer l'image de sortie,

**caractérisé en ce qu'**il comprend un dispositif d'estimation de pose de la caméra selon la revendication **9**.

**11.** Programme d'ordinateur (Pg1) comportant des instructions pour la mise en œuvre du procédé de procédé d'estimation de pose d'une caméra selon l'une quelconque des revendications **1** à **8,** lorsque ledit programme est exécuté par un processeur.

**12.** Support d'enregistrement lisible par un ordinateur, sur lequel est enregistré un programme d'ordinateur comprenant des instructions de code de programme pour l'exécution des étapes du procédé selon l'une des revendications **1** à **8.**

**Patentansprüche**

**1.** Verfahren zur Schätzung der Installation einer Kamera in einen Referenzrahmen einer dreidimensionalen Szene, umfassend die folgenden Schritte:

- Erhalten (E1) eines von der Kamera aufgenommenen Farbstärkenbildes der Szene, bezeichnet als laufendes Bild;
- Extrahieren (E2) einer Vielzahl interessierender Punkte des laufenden Bildes, wobei ein Punkt durch geometrische Transformation des Bildes invariant ist;
- Bilden (E3) einer Vielzahl von Miniaturbildern im Farbstärkenbild, wobei ein Miniaturbild einen interessierenden Punkt von der extrahierten Vielzahl umfasst;
- Vorhersagen (E4) von 3D-Lokalisierungen der interessierenden Punkte von der Vielzahl von Miniaturbildern in einem Referenzrahmen der Szene durch Anwendung eines automatischen Vorhersagesystems, wobei das System mit Hilfe einer Lerneinheit trainiert wurde, die Miniaturbilder umfasst, die aus einer Vielzahl von Bildern der Szene hervorgegangen sind, die von der Kamera aus einer Vielzahl von Blickpunkten aufgenommen wurden, wobei ein Miniaturbild in der Einheit einer 2D-Position seines interessierenden Punkts in einem Referenzrahmen des Bildes und einer 3D-Position seines interessierenden Punkts im Referenzrahmen der Szene zugeordnet ist, wobei der Vorhersageschritt eine Extraktion eines Merkmalsvektors je Miniaturbild umfasst, wobei die Anwendung des automatischen Vorhersagesystems eine Vielzahl von 3D-Lokalisierungen je extrahierten Merkmalsvektor vorhersagt;
- Schätzen (E5) einer Installation der Kamera für das laufende Bild durch Abgleichen der 2D-Positionen der Vielzahl interessierender Punkte und von Rückprojektionen im Referenzrahmen des laufenden Bildes der vorhergesagten 3D-Lokalisierungen,

wobei das automatische Vorhersagesystem einen Random Forest Classifier umfasst, der Entscheidungsbäume umfasst, wobei ein Entscheidungsbaum Separatorenknoten umfasst, wobei ein Knoten imstande ist, eine aus einem vorgelagerten Knoten hervorgegangene Merkmalsvektorengruppe binär in Untergruppen zu separieren, die Untergruppen an nachgelagerte Separatorenknoten zu übertragen und Blattknoten, die imstande sind, die 3D-Lokalisierungen der Miniaturbilder, die einer von einem vorgelagerten Separatorenknoten erhaltenen Untergruppe zugeordnet sind, zu speichern, wobei das Verfahren **dadurch gekennzeichnet ist, dass** es in einer Phase vor einem Trainingsschritt (A4) des Vorhersagesystems einen binären Separationstest umfasst, der auf einer Berechnung des Abstands zwischen dem aus einem Miniaturbild der Lerneinheit extrahierten Merkmalsvektor und einem Referenz-Merkmalsvektor ($VC_{refi}$) und einem Vergleich des berechneten Abstands mit einem vorher festgelegten Grenzwert basiert.

**2.** Verfahren zur Schätzung der Installation einer Kamera nach Anspruch 1, **dadurch gekennzeichnet, dass** das Extrahieren des Merkmalsvektors eine Vorhersage des Merkmalsvektors durch Anwendung eines zweiten automatischen Vorhersagesystems umfasst, wobei das System mit Hilfe einer Lerneinheit trainiert wurde, die Miniaturbilder umfasst, die aus einer Vielzahl von Bildern der Szene hervorgegangen sind, die von der Kamera aus einer Vielzahl von Blickpunkten aufgenommen wurden, wobei ein Miniaturbild in der Einheit einer 2D-Position seines interessierenden Punkts in einem Referenzrahmen des Bildes und einer 3D-Position seines interessierenden Punkts im Referenzrahmen der Szene zugeordnet ist.

**3.** Verfahren zur Schätzung der Installation einer Kamera nach Anspruch 2, **dadurch gekennzeichnet, dass**, wobei das zweite automatische Vorhersagesystem ein neuronales Netzwerk (CNN2) umfasst, das mehrere Convolutional Layers umfasst, das Verfahren in einer vorherigen Phase nach dem Hinzufügen einer Vielzahl von Verbindungsschichten zum neuronalen Netzwerk, die in der Folge der Convolutional Layers eingerichtet wurden, einen Trainingsschritt des zweiten System ausgehend von der Lerneinheit umfasst.

4. Verfahren nach Anspruch 1, **dadurch gekennzeichnet, dass** die vorherige Lernphase einen Schritt des Erhaltens (A3) von 3D-Lokalisierungen der Vielzahl interessierender Punkte im Referenzrahmen der Szene, bezeichnet als Ground Truth, durch geometrische Triangulation der 2D-Positionen des Punktes in dem Bild und in einem vorangehende Bild umfasst.

5. Verfahren nach Anspruch 1, **dadurch gekennzeichnet, dass** die vorherige Lernphase einen Schritt des Aufnehmens eines Tiefenbildes umfasst, das einem Intensitätsbild zugeordnet ist, wobei die Lerneinheit ferner das Tiefenbild umfasst, das dem Intensitätsbild zugeordnet ist, einen Schritt des Erhaltens (A3) von 3D-Lokalisierungen der Vielzahl interessierender Punkte im Referenzrahmen der Szene, bezeichnet als Ground Truth, durch perspektivische Projektion ihrer 2D-Position und Tiefe mit Hilfe eines vorher festgelegten Modells der Kamera und der bekannten Installation im Referenzrahmen der Szene.

6. Verfahren zur Schätzung der Installation einer Kamera nach einem der vorangehenden Ansprüche, **dadurch gekennzeichnet, dass** die Schätzung der Installation die Durchführung von mindestens einer Iteration der folgenden Unterschritte umfasst:

   - Bestimmen ($E5_1$) einer Untereinheit der Vielzahl interessierender Punkte;
   - Berechnen ($E5_2$) mindestens einer Installationshypothese ausgehend von den für die Untereinheit vorhergesagten 3D-Lokalisierungen und den entsprechenden 2D-Positionen; und
   - Evaluieren ($E5_3$) eines Rückprojektionsfehlers der 2D-Positionen der Vielzahl interessierender Punkte im Referenzrahmen der Szene mit Hilfe der im Verhältnis zu den vorhergesagten 3D-Lokalisierungen berechneten Installationshypothese;

   und dass sie eine Auswahl (E6) der Installationshypothese umfasst, die den Rückprojektionsfehler minimiert.

7. Verfahren nach Anspruch **6, dadurch gekennzeichnet, dass** eine Konfidenzmessung der geschätzten Installation mindestens in Abhängigkeit von einer Anzahl interessierender Punkte evaluiert wird, für die der Rückprojektionsfehler unter einem vorher festgelegten Grenzwert liegt.

8. Verfahren nach einem der Ansprüche **6** oder **7, dadurch gekennzeichnet, dass**, wobei die Vielzahl der vom Forest vorhergesagten 3D-Lokalisierungen eine Verteilung von je Baum vorhergesagten 3D-Lokalisierungen umfasst, wobei eine Verteilung einer Kovarianzmessung zugeordnet ist, wobei der Schätzschritt (E5) einen vorherigen Filter-Unterschritt ($E5_0$) der Vielzahl von Verteilungen vorhergesagter 3D-Lokalisierungen durch Vergleich der einer Verteilung zugeordneten Kovarianzmessung mit einem vorher festgelegten Grenzwert ($\tau_{cov}$) und Löschung der Vorhersagenverteilung, deren Kovarianzmessung größer oder gleich dem Grenzwert ist, umfasst.

9. Vorrichtung (100) zur Schätzung der Installation einer Kamera in einen Referenzrahmen einer dreidimensionalen Szene, wobei die Vorrichtung eine Rechenmaschine umfasst, die spezialisiert oder ausgelegt ist, um:

   - ein Farbstärkenbild der von der Kamera aufgenommenen Szene zu erhalten, bezeichnet als laufendes Bild;
   - eine Vielzahl interessierender Punkte des laufenden Bildes zu extrahieren, wobei ein Punkt durch geometrische Transformation des Bildes invariant ist;
   - eine Vielzahl von Miniaturbildern im Farbstärkenbild zu bilden, wobei ein Farbstärkenbild einen interessierenden Punkt von der extrahierten Vielzahl umfasst;
   - 3D-Lokalisierungen der interessierenden Punkte von der Vielzahl von Miniaturbildern in einem Referenzrahmen der Szene durch Anwendung eines automatischen Vorhersagesystems vorherzusagen, wobei das System mit Hilfe einer Lerneinheit trainiert wurde, die Miniaturbilder umfasst, die aus einer Vielzahl von Bildern der Szene hervorgegangen sind, die von der Kamera aus einer Vielzahl von Blickpunkten aufgenommen wurden, wobei ein Miniaturbild einer 2D-Position seines interessierenden Punkts in einem Referenzrahmen des Bildes und einer 3D-Position seines interessierenden Punkts im Referenzrahmen der Szene zugeordnet ist, wobei die Vorhersage eine Extraktion eines Merkmalsvektors je Miniaturbild umfasst, wobei die Anwendung des automatischen Vorhersagesystems eine Vielzahl von 3D-Lokalisierungen je extrahierten Merkmalsvektor vorhersagt;
   - eine Installation der Kamera für das laufende Bild durch Zuordnung der 2D-Positionen der Vielzahl interessierender Punkte und von Rückprojektionen in den Referenzrahmen des laufenden Bildes der vorhergesagten 3D-Lokalisierungen zu schätzen,

   wobei das automatische Vorhersagesystem einen Random Forest Classifier umfasst, der Entscheidungsbäume umfasst, wobei ein Entscheidungsbaum Separatorenknoten umfasst, wobei ein Knoten imstande ist, eine aus einem vorgelagerten Knoten hervorgegangene Merkmalsvektorengruppe binär in Untergruppen zu separieren, die Untergruppen an nachgelagerte Separatorenknoten zu übertragen und Blattknoten, die imstande sind, die 3D-Lokalisierungen der Miniaturbilder, die einer von einem vorgelagerten Separatorenknoten erhaltenen Untergruppe zugeordnet sind, zu speichern,

wobei die Vorrichtung **dadurch gekennzeichnet ist, dass** sie ausgelegt ist, um ein Training des Vorhersagesystems durchzuführen, das einen Test einer binären Separation umfasst, der auf einer Berechnung des Abstands zwischen dem aus einem Miniaturbild der Lerneinheit extrahierten Merkmalsvektor und einem Referenz-Merkmalsvektor ($VC_{refi}$) und einem Vergleich des berechneten Abstands mit einem vorher festgelegten Grenzwert basiert.

**10.** Augmented Reality-System (10), umfassend:

- eine Kamera (MACQ), die imstande ist, ein Farbstärkenbild einer realen dreidimensionalen Szene aufzunehmen,
- ein Bildkompositionsmodul (COMP), das imstande ist, ein Ausgangsbild ausgehend von einem Eingangsbild, das von der Szene von der Kamera aufgenommen wurde, und mindestens ein reales oder virtuelles Objekt mit Hilfe einer 3D-Ausgangslokalisierung des mindestens einen Objekts in der Szene und einer geschätzten Installation der Kamera zusammenzustellen,
- ein Anzeigemodul (DISP), das imstande ist, das Ausgangsbild wiederzugeben,

**dadurch gekennzeichnet, dass** es eine Vorrichtung zur Schätzung der Installation der Kamera nach Anspruch 9 umfasst.

**11.** Rechnerprogramm (Pg1), das Befehle für die Durchführung des Verfahrens zur Schätzung der Installation einer Kamera nach einem der Ansprüche 1 bis 8 aufweist, wenn das Programm von einem Prozessor ausgeführt wird.

**12.** Rechnerlesbares Speichermedium, auf dem ein Rechnerprogramm gespeichert ist, das Programmcodebefehle für die Ausführung der Schritte des Verfahrens nach einem der Ansprüche **1** bis **8** umfasst.

## Claims

**1.** A Method for estimating the pose of a camera in a frame of reference of a three-dimensional scene, comprising the following steps:

- Obtaining (E1) an image of colour intensities of the scene captured by the camera, so-called the current image;
- Extracting (E2) a plurality of points of interest from the current image, one said point being invariant by geometric transformation of the image;
- Forming (E3) a plurality of patches in the image of colour intensities, one patch comprising a point of interest of the extracted plurality;
- Predicting (E4) the 3D locations of the points of interest of the plurality of patches in a frame of reference of the scene, by application of an automatic prediction system, said system having been trained with the aid of a training set comprising patches from a plurality of images of the scene acquired by the camera from a plurality of points of view, an image being associated in said set with a 2D position of its point of interest in a frame of reference of the image and with a 3D position of its point of interest in the frame of reference of the scene, the prediction step comprising an extraction of a feature vector per patch and the application of the automatic prediction system predicting a plurality of 3D locations per extracted feature vector;
- Estimating (E5) a camera pose for the current image, by mapping the 2D positions of the plurality of points of interest and reprojections in the current image frame of reference of the predicted 3D locations,

the automatic prediction system comprising a decision random forest, comprising decision trees, a decision tree comprising separator nodes, a said node being capable of binary separating a group of feature vectors from an upstream node into subgroups, transmitting the subgroups to downstream separator nodes and leaf nodes, capable of storing the 3D locations of the patches associated with a subgroup received from an upstream separator node,

wherein the method comprises in a prior phase a step (A4) of training the prediction system comprising a binary separation test based on a calculation of distance between the vector of characteristics extracted from a patch of the training set and a vector of reference characteristics ($VC_{refi}$) and a comparison of the calculated distance with respect to a predetermined threshold.

2. The method for estimating the pose of a camera according to claim **1, characterized in that** the extraction of the feature vector comprises a prediction of the feature vector by application of a second automatic prediction system, said system having been trained with the aid of a training set comprising patches from a plurality of images of the scene acquired by the camera from a plurality of viewpoints, a patch being associated in said set with a 2D position of its point of interest in a frame of reference of the image and a 3D position of its point of interest in the frame of reference of the scene.

3. The method for estimating the pose of a camera according to claim 2, **characterized in that**, the second automatic prediction system comprising a neural network (CNN2) comprising several convolution layers, the method comprises in a preliminary phase a step of training the second system from the training set, after adding to said neural network a plurality of connection layers arranged following the convolution layers.

4. The method according to claim 1, **characterized in that** the prior training phase comprises a step (A4) of obtaining 3D localizations of the plurality of points of interest in the scene reference frame, known as ground truth, by geometric triangulation of the 2D positions of the point in the image and in a previous image.

5. The method according to claim 1, **characterized in that** the prior training phase comprises a step of acquiring a depth image associated with an intensity image, the training set further comprises the depth image associated with the intensity image, a step of obtaining (A4) 3D localizations of the plurality of points of interest in the scene's reference frame, known as ground truth by perspective projection of their 2D position and depth using a predetermined model of the camera and the known pose, in the scene's reference frame.

6. The method for estimating the pose of a camera according to any of the preceding claims, **characterized in that** the pose estimation comprises performing at least one iteration of the following sub-steps:

   - Determination (E51) of a subset of the plurality of points of interest;
   - Calculating (E52) at least one pose assumption from the predicted 3D locations for the subassembly and the corresponding 2D positions; and
   - Evaluating (E53) a reprojection error of the 2D positions of the plurality of points of interest in the scene frame of reference using the calculated pose hypothesis with respect to the predicted 3D locations ;

and **in that** it comprises a selection (E6) of the pose hypothesis that minimizes the reprojection error.

7. The method according to claim **6, characterized in that** a confidence measure of the estimated pose is evaluated at least as a function of a number of points of interest, for which the reprojection error is below a predetermined threshold.

8. The method according to one of claims **6** or **7 characterized in that**, the plurality of 3D locations predicted by the forest comprising a distribution of predicted 3D locations per tree, one said distribution being associated with a covariance measure, the estimation step (E5) comprises a prior sub-step (E50) of filtering the plurality of distributions of predicted 3D locations by comparing the associated covariance measure a distribution with a threshold ($\tau_{cov}$) and suppression of the predicted distribution whose covariance measure is greater than or equal to said threshold.

9. A device (100) for estimating the pose of a camera in a reference frame of a three-dimensional scene, said device comprising a computing machine dedicated to or configured for:

   - Obtaining a color intensity image of the scene captured by the camera, called the current image;
   - Extracting a plurality of points of interest from the current image, a said point being invariant by geometric transformation of the image;
   - Forming a plurality of patches in the image of color intensities, a patch comprising a point of interest of the extracted plurality;
   - Predicting 3D locations of the points of interest of the plurality of patches in a scene repository by applying an automatic prediction system, said system having been trained using a training set comprising patches from a plurality of images of the scene acquired by the camera from a plurality of viewpoints, a patch being associated with a 2D position of its point of interest in an image repository and a 3D position of its point of interest in the scene repository;
- Estimating the pose of a camera for the current image, by mapping the 2D positions of the plurality of points of interest and reprojections in the current image frame of reference of the predicted 3D locations.

the automatic prediction system comprising a decision random forest, comprising decision trees, a decision tree comprising separator nodes, a said node being capable of binary separating a group of feature vectors from an upstream node into subgroups, transmitting the subgroups to downstream separator nodes and leaf nodes, capable of storing the 3D locations of the patches associated with a subgroup received from an upstream separator node, wherein the device is set up to implement a prior training of the prediction system comprising a binary separation test based on a calculation of distance between the vector of characteristics extracted from a patch of the training set and a vector of reference characteristics ($VC_{refi}$) and a comparison of the calculated distance with respect to a predetermined threshold.

10. An augmented reality system (10) comprising:

- a camera (MACQ) capable of acquiring an image of colour intensities of a real three-dimensional scene,
- an image composition module (COMP) capable of composing an output image from an input image acquired from the scene by the camera and at least one real or virtual object, using an initial 3D location of said at least one object in the scene and an estimated pose of the camera,
- a display module (DISP) capable of reproducing the output image,

**characterized in that** it comprises a device for estimating the pose of a camera according to claim **9.**

11. A computer program (Pg1) having instructions for implementing the method for estimating the method for estimating the pose of a camera according to any one of claims **1** to **8,** when said program is executed by a processor.

12. A computer-readable recording medium on which is recorded a computer program comprising program code instructions for implementing steps of the method according to any one of claims **1** to **8.**

FIG. 1

$I^C$

$I^D$

W

n

FIG. 2

Pk

FIG. 3

FIG. 4

FIG. 5

FIG. 6

FIG. 7

max pooling 3x3 stride2

FIG. 8

ACQ RGB — E1

EXTR. KP — E2

FORM Pk — E3

PRED LOC 3D(Pk) — E4

...

EST H — E5

FIG. 9

DET SS(Pk) — $E5_{11}$

EST Hj — $E5_{12}$ — $E5_1$

CALC Er — $E5_{13}$

SEL H — $E5_2$

FIG. 10

FIG. 11

FIG. 12

Pk

E41'

VC

E42'

conv1 Pool1 LRN1 conv2 Pool2 conv3 conv4 conv5

$49 \times 49 \times 3$

$\begin{bmatrix} v_1 \\ v_2 \\ v_3 \\ v_4 \\ \vdots \\ \vdots \\ v_d \end{bmatrix}$

Tree 1       Tree N

$\cdots$

Loc3D$_{li1}$  Loc3D$_{li2}$   ...   Loc3D$_{liL}$

## FIG. 13

$VC_1$ | $V_1$ | ... | $V_D$
$VC_2$ | $V_1$ | ... | $V_D$

$VC_K$ | $V_1$ | ... | $V_D$

$\theta_i = \{VC_{refi}, \tau_i \,|\, VC_{refi} \in S\}$

$S_i$

$\alpha < \tau_i$         $\alpha \geq \tau_i$         $\alpha = \left\| VC_j - VC_{refi} \right\|_2^2$

$S^L$         $S^R$

$\mathcal{N}(loc3D, \overline{loc3D}, \Sigma_{loc3D})$

AD

I

## FIG. 14

•••• Inv
PoseNet
VT

FIG. 15

FIG. 16

a) Frame #001   b) Frame #005   c) Frame #050   d) Frame #100

## FIG. 17

## FIG. 18

## FIG. 19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KENDALL et al.** PoseNet : A convolutional Network for Rel-Time 6-DOF Camera Relocalization. *Proceedings de la conférence IEEE International Conference on Computer Vision,* 2015, 2938-2946
- **NEWCOMBE et al.** KinectFusion : Real-time Dense Surface Mapping and Tracking. *IEEE International Symposium on Mixed and Augmented Reality (IS-MAR),* 2011
- **WASENMÜLLER et al.** Corbs : Comprehensive RGB-D Benchmark for SLAM using Kinect v2. *conférence Applications of Computer Vision,* 2016, 1-7
- **BAY et al.** Speeded-up Robust Features (SURF). *Computer Vision and Image Understanding,* 2008, (110), 346-359
- **SHOTTON et al.** Scene Coordinate Regression Forests for Camera Relocalisation in RGB-D images. *Conférence IEEE Conference on Computer Vision and Pattern Recognition,* 2013